# EUROPEAN PATENT APPLICATION

(11) **EP 1 748 605 A2**
(43) Date of publication of application: **31.01.2007**
(21) Application number: 05256782.3
(22) Date of filing: 02.11.2005
(51) Int. Cl.: H04L 12/56, H04Q 7/38

(54) **Control of data transmission from a mobile station at the time of handover**

(30) Priority: 27.07.2005 JP 2005216997
(71) Applicant: Fujitsu Ltd., Kawasaki-shi, Kanagawa 211-8588 (JP)
(72) Inventor: Yano, Tetsuya, c/oFujitsu Limited, Kawasaki-shi Kanagawa 211-8588 (JP); Miyazaki, Shunji, c/oFujitsu Limited, Kawasaki-shi Kanagawa 211-8588 (JP); Obuchi, Kazuhisa, c/oFujitsu Limited, Kawasaki-shi Kanagawa 211-8588 (JP)
(74) Representative: Hitching, Peter Matthew

(57) **Abstract**

Each radio base station (11, 21) evaluates whether a radio environment between itself and a mobile station (13) is an environment in which diversity gain is obtained or an environment in which diversity gain is not obtained and interference will be impressed upon communication with another radio base station, allows the mobile station to transmit if the radio environment is the environment in which diversity gain is obtained, disallows the mobile station to transmit if the environment is the environment in which interference will be impressed upon communication with another radio base station, and neither allows nor disallows the mobile station to transmit if the environment is an environment in which although diversity gain is not obtained, no interference will be impressed upon communication with another radio base station. The mobile station performs a transmission of uplink data if it is being allowed to transmit by one or more radio base stations and, moreover, it is not being disallowed to transmit by any radio base station.

## Description

### BACKGROUND OF THE INVENTION

This invention relates to a mobile communication system having a mobile station and first and second radio base stations for receiving a radio signal transmitted from the mobile station, and to a radio base station and mobile station in this mobile communication system. More particularly, the invention relates to a mobile communication system in which a diversity effect can be obtained and amount of interference impressed on other base stations reduced at the time of handover, and to a radio base station and mobile station in this system.

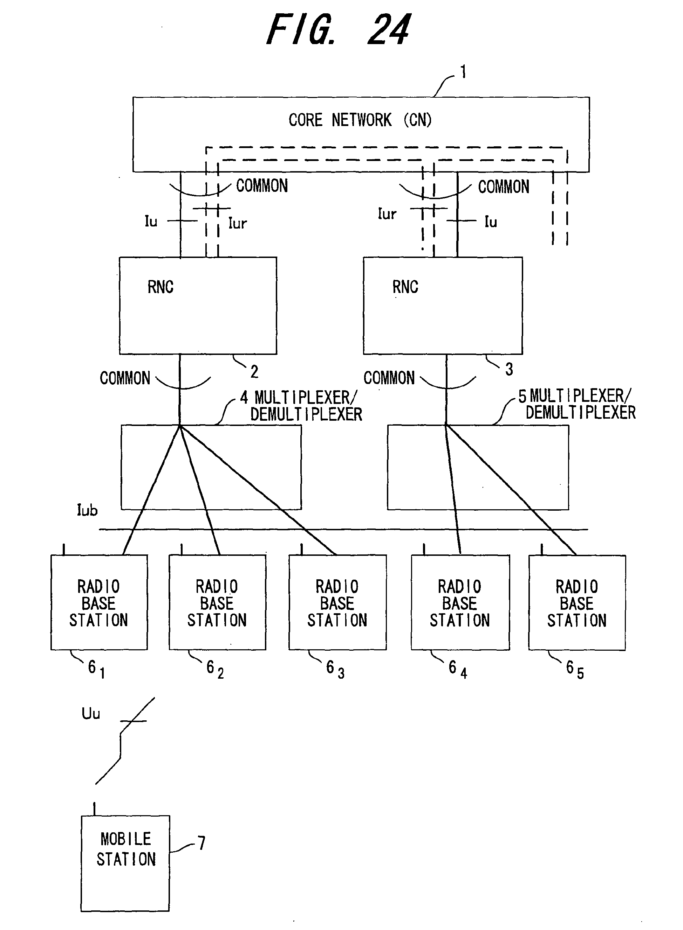

A W-CDMA mobile communication system is a wireless communication system in which a channel is shared by multiple users. As shown in Fig. 24, the W-CDMA mobile communication system comprises a core network 1, radio network controllers (RNCs) 2, 3, multiplexers 4, 5, radio base stations (Node B) 6₁ to 6₅ and a mobile station (UE: User Equipment) 7.

The core network 1 is a network for performing routing within the mobile communication system and can be constructed by an ATM switching network, packet switching network and router network, etc. It should be noted that the core network 1 is also connected to another public network (PSTN), etc., so that it is also possible for the mobile station 7 to communicate with a stationary telephone or the like.

The radio network controllers (RNCs) 2, 3 are positioned as higher order devices with respect to the radio base stations 6₁ to 6₅ and function to control the radio base stations 6₁ to 6₅ (i.e., to manage the radio resources used). The radio network controllers (RNCs) 2, 3 also have a handover control function for receiving a signal, which is from the one mobile station 7, from a plurality of radio base stations under their control, selecting data having good quality and transmitting the data to the side of the core network 1 at the time of handover.

The multiplexers 4, 5, which are provided between the RNCs and the radio base stations, exercise control for demultiplexing signals received from the RNCs 2, 3 and destined for each of the radio base stations, and outputting the demultiplexed signals toward each of the radio base stations, and for multiplexing signals from each of the radio base stations and delivering them to the side of the RNCs.

The radio base stations 6₁ to 6₃ perform radio communication with the mobile station 7 while radio resources are managed by the RNC 2, and the radio base stations 6₄ and 6₅ perform radio communication with the mobile station 7 while radio resources are managed by the RNC 3. Owing to residence of the mobile station 7 in the radio area of the prescribed radio base stations 6₁ to 6₅, the mobile station 7 establishes a radio link between itself and each of the radio base stations 6₁ to 6₅ and communicates with another communication apparatus via the core network 1.

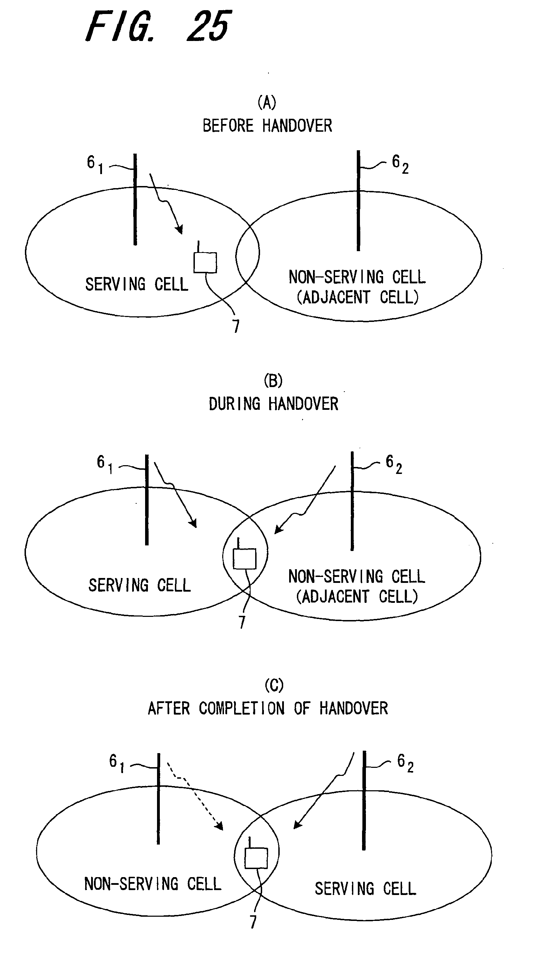

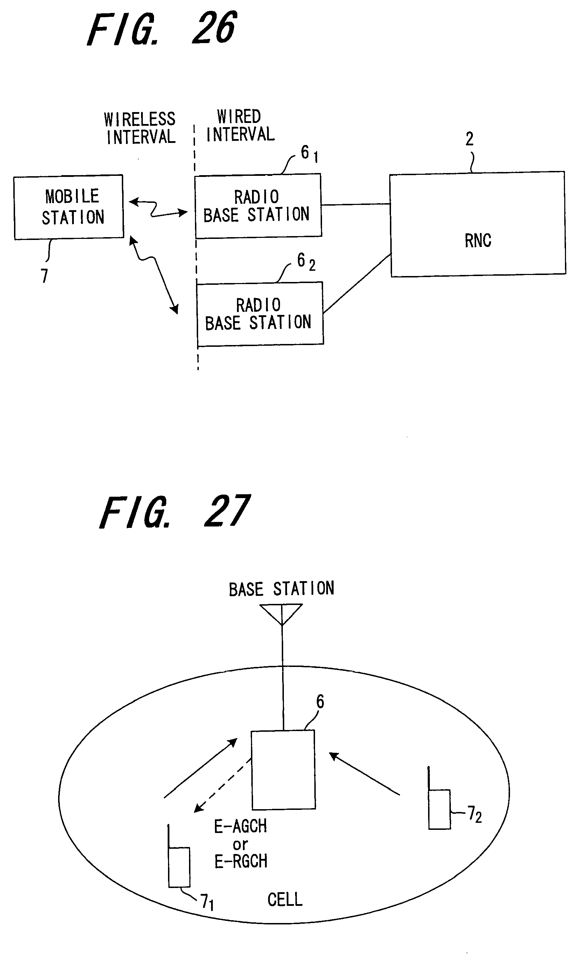

When the mobile station 7 is communicating data with the base station 6₁ that is a serving cell in such a W-CDMA mobile communication system [see (A) of Fig. 25], a handover state is attained if the mobile station 7 approaches an adjacent cell (a non-serving cell) owing to movement of the mobile station [see (B) of Fig. 25]. If, when the handover state is attained, the quality of the signal received from the base station 6₂, which is a non-serving cell), is superior to the SIR of the signal received from the base station 6₁ that is the serving cell, then the communicating base station is changed over from the base station 6₁ to the base station 6₂ and reception of data is continued in accordance with handover control by the RNC communication system [see (C) of Fig. 25]. Further, in the handover state, the RNC selects whichever uplink data, which is received from the two base stations 6₁ and 6₂, is better, as shown in Fig. 26. Control for selecting the quality that is best is referred to as "selective combining", and such control at the time of handover is referred to as "diversity handover".

An HSUPA (High-Speed Uplink Packet Access) scheme is available as a transmission control technique (a first example of prior art) for transmitting uplink data from a mobile station to a radio base station (see TSG RAN WG2 Meeting #44 Tdoc #R2-041997). According to this example of the prior art, a scheduler of base station 6 monitors the total amount of uplink interference (reception power) from mobile stations 7₁, 7₂ under control, as illustrated in Fig. 27, and compares the reception power with a threshold value to thereby instruct the mobile stations of the transmission rate in the form of an absolute value using an E-AGCH (maximum-rate absolute-value designation command), or to instruct the mobile stations to increase, maintain or decrease the transmission rate using an E-RGCH (maximum-rate relative-value designation command). There are two types of scheduling methods, namely rate scheduling or time scheduling. Rate scheduling is a scheduling method (all-user simultaneous transmission) of allowing all mobile stations to perform a transmission of uplink data in parallel on the condition that interference at the base station does not exceed a designated value. Time scheduling is a scheduling method (time-division multiplexed transmission) of allowing only some mobile stations for which uplink traffic exists to transmit uplink data at each instant on the condition that interference at the base station does not exceed a designated value.

Also available as a transmission control technique (a second example of prior art) for transmitting uplink data from a mobile station to a radio base station is a technique for controlling the permission or refusal of communication by transmitting a signature (a control signal that notifies of communication permission or refusal) from the base station to the mobile station before the start of communication (see the specification of JP2003-229787A). This example of the prior art has a first step at which the mobile station requests the base station for communication, a second step at which the base station transmits a signature to the mobile station in response to the communication request, a third step at which the mobile station integrates the signature signal from the base station, and a fourth step at which the mobile station compares the integrated signal S with a threshold value and decides to permit or refuse communication. That is, at the fourth step, it is decided that the communication request has been permitted if the integrated value S is greater than a threshold value A, that the communication request has been refused if the integrated value S resides between threshold values A and B, and that the communication request has been put on hold if the integrated value S is less than the threshold value B.

Further available as a transmission control technique (a third example of prior art) for transmitting uplink data from a mobile station to a radio base station is a technique for controlling the permission or refusal of communication based upon reception level of a preamble (see the specification of JP2001-204072A). The mobile station in this example of the prior art transmits a preamble to the base station before the transmission of a message starts, and the base station controls the permission or refusal of transmission from the mobile station based upon the reception level of the preamble.

The first example of the prior art, namely the HSUPA scheme, is control whereby a mobile station is instructed of the maximum transmission rate of the uplink channel in such a manner that the total amount of uplink interference at the base station of interest will not exceed a fixed amount. This is a method that allows the existence of a certain amount of interference at all times. As a consequence, the amount of interference imposed upon another base station at handover increases and there is a decline in the reception quality from other mobile stations at this other base station. For example, when a mobile station is present at a location that is equidistant from a plurality of base stations (this location shall be referred to as a "handover area" below), the reception level of a base station that is a non-serving cell fluctuates owing to fading and the like and there are instances where the base station receives a signal having a somewhat low reception level. In this case the probability that the base station constituting the non-serving cell will receive the signal correctly diminishes, the processing executed at this base station is wasted and radio waves from the above-mentioned mobile station will interfere with signal radio waves between the base station and other mobile stations.

The second and third examples of the prior art determine threshold values in order to decide whether a transmission should be permitted or refused before the start of message transmission. These are not schemes that control transmission by determining radio-environment threshold values at the time of handover.

### SUMMARY OF THE INVENTION

Accordingly, an object of the present invention is to so arrange it that in the handover state, a mobile station is allowed to transmit if it is expected that diversity gain will be obtained, and is not allowed to transmit if interference will be imposed on other communications.

Another object of the present invention is to make it possible to obtain a diversity effect in accordance with conditions at the time of handover, or to reduce the amount of interference imposed on other communications at the time of handover, thereby improving the performance of the system (suppressing a decline in reception quality and improving transmission capacity).

The present invention provides a mobile communication system having a mobile station and first and second radio base stations for receiving a radio signal transmitted from the mobile station, as well as a radio base station and mobile station in this mobile communication system.

### ·Mobile communication system

The mobile communication system according to the present invention comprises an evaluation unit for evaluating a first radio environment between the mobile station and the first radio base station, and a second radio environment between the mobile station and the second radio base station; and a transmission controller for exercising control that limits transmission of data from the mobile station in a case where, based upon the evaluation in the evaluation unit, the first radio environment belongs to a first radio environment state superior to a prescribed first reference but the second radio environment belongs to a second radio environment state that is not superior to a prescribed second reference.

In the radio communication system of the present invention, the evaluation unit decides a third reference for which the radio environment is not superior to that of the second reference, and adopts a radio environment state that belongs between the third reference and the second reference as the second radio environment state. Further, the transmission controller allows transmission of data from the mobile station in a case where, based upon the evaluation in the evaluation unit, the first radio environment belongs to the first radio environment state superior to the prescribed first reference but the second radio environment belongs to a third radio environment state that is not superior to the third reference.

In the mobile communication system of the present invention, the evaluation unit is provided in each radio base station, the transmission controller is provided in the mobile station, the evaluation unit of each radio base station transmits results of evaluation of the first and second radio environments to the transmission controller of the mobile station, and the transmission controller exercises regulatory control of the transmit data based upon results of evaluation of the first and second radio environments.

In the mobile communication system of the present invention, the evaluation unit and the transmission controller are provided in the mobile station, and the evaluation unit evaluates the first and second radio environments and inputs results of evaluation to the transmission controller for each radio base station.

### ·Radio base station

A radio base station according to the present invention comprises a radio environment evaluation unit for evaluating whether a radio environment between a mobile station and the base station is an environment in which diversity gain is obtained or an environment in which diversity gain is not obtained and interference will be impressed upon communication with another radio base station; and a transmission controller for allowing the mobile station to transmit if the radio environment is the environment in which diversity gain is obtained, disallowing the mobile station to transmit if the radio environment is the environment in which interference will be impressed upon communication, and neither allowing nor disallowing the mobile station to transmit if the radio environment is an environment in which, although diversity gain is not obtained, no interference will be impressed upon communication. It should be noted that the mobile station performs a transmission of uplink data if it is being allowed to transmit by one or more radio base stations and, moreover, it is not being disallowed to transmit by any radio base station..

In the radio base station, the radio environment evaluation unit has a measurement unit for measuring reception quality or reception level of a signal, which has been received from the mobile station, as a discrimination value for discriminating the radio environment; and a comparator for comparing this discrimination value with a first threshold value and a second threshold value that is smaller than the first threshold value. The transmission controller allows the mobile station to transmit if the discrimination value is greater than the first threshold value, disallows the mobile station to transmit if the discrimination value is less than the first threshold value and greater than the second threshold value, and neither allows nor disallows the mobile station to transmit if the discrimination value is less than the second threshold value. Further, the radio environment evaluation unit has a threshold-value changing unit for controlling the first and second threshold values depending upon type of data transmitted.

### ·Mobile station

A mobile station according to the present invention comprises a radio environment measurement unit for measuring radio environments between this mobile station and one or more radio base stations; a radio environment discrimination unit for comparing, for each radio base station, a radio environment measurement value with a first threshold value and a second threshold value that is smaller than the first threshold value, determining that the radio environment is one in which a transmission to the radio base station is possible if the measurement value is greater than the first threshold value, determining that the radio environment is one in which a transmission to the radio base station is impossible if the measurement value is less than the first threshold value and greater than the second threshold value, and determining that the radio environment is one in which no interference will be impressed upon the radio base station, even if the mobile station transmits, if the measurement value is less than the second threshold value; and a transmission controller for performing a transmission of uplink data if the radio environments between this mobile station and one or more radio base stations are radio environments in which the transmission is possible and, moreover, the radio environment between this mobile station and any radio base station is not a radio environment in which the transmission is impossible.

In the mobile station of the present invention, the radio environment measurement unit measures reception quality or reception level of a signal, which has been received from the radio base station, as a discrimination value for discriminating the radio environment. Further, the radio environment discrimination unit has a threshold-value changing unit for controlling the first and second threshold values depending upon type of data transmitted.

In accordance with the mobile communication system of the present invention, a first radio environment between a mobile station and a first radio base station and a second radio environment between the mobile station and a second radio base station are evaluated, and control for regulating transmission of data from the mobile station is performed in a case where, based upon the evaluation, the first radio environment belongs to a first radio environment state superior to a prescribed first reference but the second radio environment belongs to a second radio environment state that is not superior to a prescribed second reference. As a result, the effect of handover diversity can be obtained, or amount of interference impressed upon other radio base stations can be reduced, in accordance with the radio environments between the mobile station and plurality of radio base stations, and the performance of the system can be improved.

In particular, a third reference for which the radio environment is not superior to that of the second reference is decided, a radio environment state that belongs between the third reference and the second reference is adopted as the second radio environment state, a radio environment state that belongs on a side not superior to the third reference is adopted as a third radio environment state, and a data transmission from the mobile station is allowed if the first radio environment belongs to the first radio environment state superior to the prescribed first reference but the second radio environment belongs to the third radio environment state. As a result, the effect of handover diversity can be obtained or the amount of influence upon other radio base stations can be mitigated to improve the performance of the system.

In accordance with the radio base station of the present invention, the radio base station allows the mobile station to transmit if it is in the environment in which diversity gain is obtained, disallows the mobile station to transmit if it is in the environment in which interference will be impressed upon communication, and neither allows nor disallows the mobile station to transmit if it is in an environment in which although diversity gain is not obtained, no interference will be impressed upon communication. The mobile station performs a transmission of uplink data if it is being allowed to transmit by one or more radio base stations and, moreover, it is not being disallowed to transmit by any radio base station. As a result, the effect of diversity can be obtained, or amount of interference impressed upon other base stations can be reduced, in accordance with the radio environments between the mobile station and plurality of radio base stations, and the performance of the system can be improved.

In accordance with the radio base station of the present invention, the radio base station measures reception quality or reception level of a signal, which has been received from the mobile station, as a discrimination value for discriminating the radio environment, compares this discrimination value with a first threshold value and a second threshold value that is smaller than the first threshold value, and can easily determine uniformly whether the environment is one in which diversity gain is obtained, one in which interference will be imposed upon communication with other radio base stations, or one in which although diversity gain is not obtained, no interference is imposed upon other communication with other radio base stations. Further, since it is so arranged that the first and second threshold values are controlled depending upon the type of data transmitted, optimum threshold values can be set based upon the urgency of the data, the quality required by the data, etc.

Further, in accordance with the radio base station of the present invention, transmission control information indicating whether transmission is allowed or not allowed is transmitted to the mobile station at a certain frequency, or the transmission control information is transmitted to the mobile station when the content of the transmission control information, which is communicated to the mobile station, has changed. As a result, wasteful use of radio resources can be suppressed and interference reduced by adopting a suitable transmission frequency for the control information.

Further, in accordance with the mobile station of the present invention, the mobile station measures radio environments between this itself and one or more radio base stations, compares, for each radio base station, a radio environment measurement value with a first threshold value and a second threshold value that is smaller than the first threshold value, determines that the radio environment is one in which a transmission to the radio base station is possible if the measurement value is greater than the first threshold value, determines that the radio environment is one in which a transmission to the radio base station is impossible if the measurement value is less than the first threshold value and greater than the second threshold value, determines that the radio environment is one in which no interference will be impressed upon the radio base station, even if the mobile station transmits, if the measurement value is less than the second threshold value, and performs a transmission of uplink data if the radio environments between this mobile station and one or more radio base stations are radio environments in which the transmission is possible and, moreover, the radio environment between this mobile station and any radio base station is not a radio environment in which the transmission is impossible. As a result, the effect of diversity can be obtained, or amount of interference impressed upon communication with other base stations can be reduced, in accordance with the radio environments between the mobile station and plurality of radio base stations, and the performance of the system can be improved. In this case, if the first and second threshold values are controlled depending upon the type of data transmitted, the optimum threshold values can be set based upon the urgency of the data, the quality required by the data, etc.

Other features and advantages of the present invention will be apparent from the following description taken in conjunction with the accompanying drawings.

### BRIEF DESCRIPTION OF THE DRAWINGS

Fig. 1 is a diagram useful in describing the positional relationship between radio base stations and mobile stations;
Fig. 2 is a diagram useful in describing an overview of transmission control in the handover state;
Fig. 3 is a diagram useful in describing ranges of levels for allowing or not allowing transmission at a radio base station;
Fig. 4 is a diagram illustrating the configuration of a mobile communication system according to a first embodiment of the present invention;
Fig. 5 is a diagram illustrating the structure of an uplink frame standardized according to 3GPP;
Fig. 6 is a diagram illustrating the frame structure of a signaling channel;
Fig. 7 is a block diagram of a mobile station according to the first embodiment;
Fig. 8 illustrates examples of frame structures of uplink and downlink frames in a case where time multiplexing is performed;
Fig. 9 illustrates examples of frame structures of uplink and downlink frames in a case where frequency multiplexing and time multiplexing are performed;
Fig. 10 is a diagram useful in describing ranges of levels at a base station for allowing or not allowing transmission in a case where a first threshold value is made small and a second threshold value is made large;
Fig. 11 is a block diagram of a radio base station according to a second embodiment of the present invention;
Fig. 12 illustrates examples of reservation packets according to a third embodiment of the present invention;
Fig. 13 illustrates examples of signaling packets (allow packet and disallow packet);
Fig. 14 is a diagram useful in describing transceive timing of a reservation packet, allow packet and disallow packet;
Fig. 15 is a block diagram of a mobile station according to a third embodiment of the present invention;
Fig. 16 is a block diagram of a radio base station according to the third embodiment;
Fig. 17 is a diagram useful in describing reception-level measurement timing and transmit timing of a signaling packet according to a first modification;
Fig. 18 is a diagram useful in describing transmit timing in a second modification in which a signaling packet is transmitted to a mobile station only in a case where signaling content has changed;
Fig. 19 is a diagram useful in describing reception-level measurement timing and transmit timing of a signaling packet according to a third modification;
Fig. 20 is a diagram useful in describing transmit timing in a modification in which a signaling packet is transmitted to a mobile station only in a case where signaling content has changed;
Fig. 21 is a diagram useful in describing ranges of levels for allowing or not allowing transmission at a mobile station;
Fig. 22 is a diagram illustrating the configuration of a mobile communication system according to a fourth embodiment of the present invention;
Fig. 23 is block diagram of a mobile station according to the fourth embodiment;
Fig. 24 is a diagram illustrating the configuration of a W-CDMA mobile wireless communication system according to the prior art;
Fig. 25 is a diagram useful in describing handover in a W-CDMA mobile wireless communication system according to the prior art;
Fig. 26 is a diagram useful in describing selective combining in an RNC; and
Fig. 27 is a diagram useful in describing HSUPA.

### DESCRIPTION OF THE PREFERRED EMBODIMENTS

### (A) Overview of the present invention

In a mobile communication system having a mobile station and first and second radio base stations for receiving a radio signal transmitted from the mobile station, each radio base station evaluates whether a radio environment between the mobile station and this radio base station is an environment in which diversity gain is obtained or an environment in which diversity gain is not obtained and interference will be impressed upon communication with another radio base station, allows the mobile station to transmit if the radio environment is the environment in which diversity gain is obtained, disallows the mobile station to transmit if the radio environment is the environment in which interference will be impressed upon communication with another radio base station, and neither allows nor disallows the mobile station to transmit if the environment is an environment in which although diversity gain is not obtained, no interference will be impressed upon communication with another radio base station. The mobile station performs a transmission of uplink data if it is being allowed to transmit by one or more radio base stations and, moreover, it is not being disallowed to transmit by any radio base station.

### [First Embodiment]

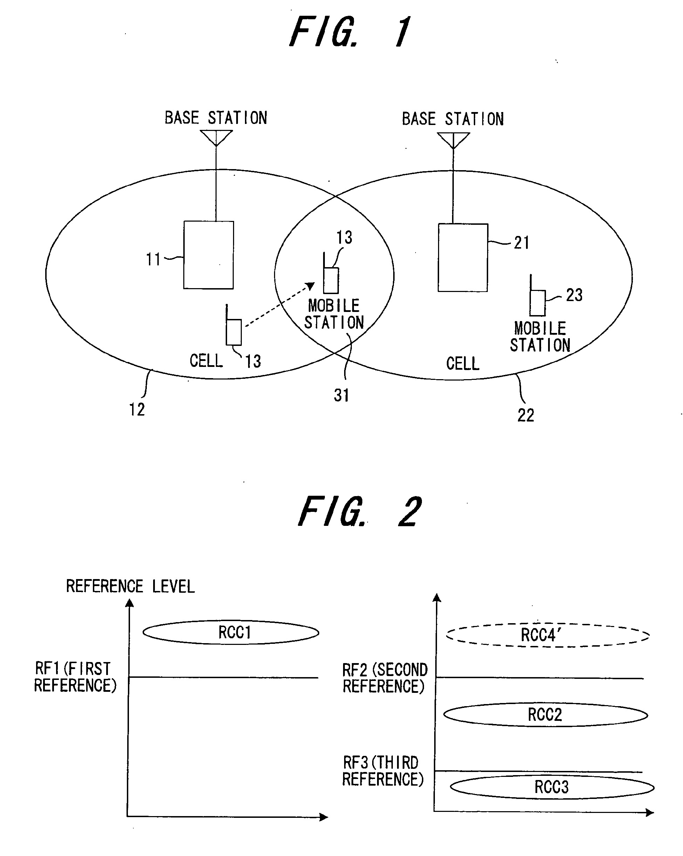

Fig. 1 is a diagram useful in describing the positional relationship between radio base stations and mobile stations. A first radio base station 11 communicates with a mobile station 13 that is present in a cell 12, and second radio base station 21 communicates with a mobile station 23 that is present in the cell 22. If mobile station 13 moves in the direction of the second radio base station 21 and penetrates a handover area 31, as indicated by the dashed line, while communicating with the first radio base station 11, then a handover state in which the mobile station 13 sends and receives the same data to and from the first and second radio base stations 11, 21 simultaneously is attained, as described above with reference to Fig. 25.

In order to exercise transmission control in the handover state, a first reference RF1, second reference RF2 and third reference RF3 (RF3<RF2) are set. Although first reference RF1 and second reference RF2 are made the same here, it is not necessarily required that they be the same. A state in which the radio environment between the radio base station and mobile station is superior to the first reference RF1 shall be referred to as a first radio environment state RCC1, a state in which the radio environment between another radio base station and the mobile station is inferior to the second reference RF2 and superior to the second reference RF2 shall be referred to as a second radio environment state RCC2, and a state in which the radio environment between the other radio base station and the mobile station is inferior to the third reference RF3 shall be referred to as a third radio environment state RCC3. Furthermore, a state in which the radio environment between the other radio base station and the mobile station is superior to the second reference RF2 shall be referred to as a fourth radio environment state RCC4.

### ·First Transmission Control

In the handover state, the first radio base station 11 determines whether a first radio environment between itself and the mobile station 13 belongs to the first radio environment state RCC1, and the second radio base station 21 determines whether a second radio environment between itself and the mobile station 13 belongs to the second radio environment state RCC2 and notifies the mobile station 13 of what has been determined. The mobile station 13 does not perform a transmission of data if the first radio environment belongs to the first radio environment state RCC1 and the second radio environment belongs to the second radio environment state RCC2. More specifically, even though the mobile station 13 is in an environment in which the first radio environment belongs to the first radio environment state RCC1 and diversity gain is obtained, the mobile station 13 does not perform a transmission of data if it is in an environment in which the second radio environment belongs to the second radio environment state RCC2, diversity gain is not obtained and interference is impressed upon other communication, namely communication with the second radio base station 21. With this control, the radio state that is inferior to the second reference RF2 can be included in the second radio environment state RCC2.

### Second Transmission Control

The first radio base station 11 determines whether a first radio environment between itself and the mobile station 13 belongs to the first radio environment state RCC1, and the second radio base station 21 determines whether a second radio environment between itself and the mobile station 13 belongs to the third radio environment state RCC3 and notifies the mobile station 13 of what has been determined. The mobile station 13 performs a transmission of data if the first radio environment belongs to the first radio environment state RCC1 and the second radio environment belongs to the third radio environment state RCC3. More specifically, the mobile station 13 performs a data transmission if it is in an environment in which the first radio environment belongs to the first radio environment state RCC1 and diversity gain is obtained, and is in an environment in which the second radio environment belongs to the third radio environment state RCC3 and no interference is impressed upon communication with the second radio base station 21.

### ·Third Transmission Control

If, in addition to the foregoing, the first radio environment belongs to the first radio environment state RCC1 and the second radio environment belongs to the fourth radio environment state RCC4, then the mobile station 13 performs a data transmission. That is, the mobile station 13 performs a data transmission if it is in an environment in which the first radio environment belongs to the first radio environment state RCC1 and diversity gain is obtained, and is in an environment in which the second radio environment belongs to the fourth radio environment state RCC4 and diversity gain is obtained.

If the arrangement set forth above is adopted, the effect of handover diversity can be obtained, or the amount of interference inflicted upon other radio base stations can be reduced, in accordance with the radio environments between a mobile station and a plurality of radio base stations. This makes it possible to improve the performance of the system.

### (B) First Embodiment

As shown in Fig. 1, it is assumed that the mobile station 13 is present at a location that is equidistant from the first radio base station 11 and second radio base station 21. In such case the reception levels of a signal from the mobile station 13 at the first radio base station 11 and at the second radio base station 21 will be the same in average terms and the signal from the mobile station 13 will be capable of being received by both the first radio base station 11 and second radio base station 21. In actuality, however, the reception levels fluctuate independently owing to fading and the like and, as a consequence, whether the signal from the mobile station 13 can be received correctly at each of the radio base stations 11, 21 fluctuates independently.

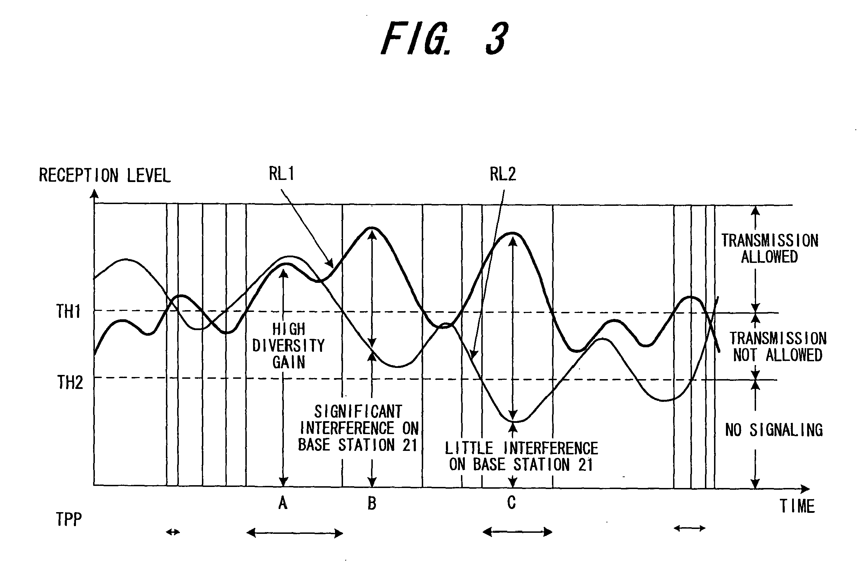

Fig. 3 is a diagram useful in describing ranges of levels for allowing or not allowing transmission. At a time A in Fig. 3, reception levels RL1, RL2 of a signal from the mobile station 13 are greater than a threshold value TH1 at both first radio base station 11 and second radio base station 21. As a result, the probability that the signal from the mobile station 13 can be received correctly by one or both of the radio base stations 11, 21 is very high, and diversity gain can be obtained.

On the other hand, at a time B in Fig. 3, the reception level RL1 from the mobile station 13 at the first radio base station 11 is high and the reception level RL2 from the mobile station 13 at the second radio base station 21 is medium. In such case the probability that the signal from the mobile station 13 can be received correctly at the first radio base station 11 is high but the probability that it can be received correctly at the second radio base station 21 is low. Further, there is a possibility that the second radio base station 21 will be communicating with the other mobile station 23 that is present in cell 22, and the radio waves emitted from the mobile station 13 may interfere with the radio waves that the mobile station 23 transmits to the second radio base station 21.

Furthermore, at a time C in Fig. 3, the reception level RL1 from the mobile station 13 at the first radio base station 11 is high and the reception level RL2 from the mobile station 13 at the second radio base station 21 is low. In such case the probability that the signal from the mobile station 13 can be received correctly at the first radio base station 11 is high but the probability that it can be received at the second radio base station 21 is very low. However, radio waves emitted from the mobile station 13 will not interfere with radio waves that the mobile station 23 transmits to the second radio base station 21.

In view of the foregoing, the radio base stations 11, 21 perform control independently as follows: The radio base stations 11, 21 provide two threshold values TH1, TH2 (TH1>TH2) with respect to reception level in order to determine whether to grant the mobile station 13 permission to transmit. The radio base stations 11, 21 compare the reception levels RL1, RL2 with the first and second threshold values TH1, TH2 independently. Based upon the comparison, the radio base stations 11, 21 operate as follows:
(1) each instructs the mobile station 13 that transmission is allowed in a case where the reception level of the signal from the mobile station 13 is greater than the threshold value TH1;
(2) each instructs the mobile station 13 that transmission is not allowed (that transmission is refused) in a case where the reception level of the signal from the mobile station 13 is less than the threshold value TH1 and greater than the threshold value TH2; and
(3) each neither allows nor disallows transmission (the radio base stations do not perform signaling) in a case
where the reception level of the signal from the mobile station 13 is less than the threshold value TH2.

In (3) above, signaling for granting permission to transmit may just as well be performed. However, even if the mobile station transmits uplink data, the base stations cannot receive the signal. Moreover, the signal will not constitute interference. Even if the mobile station transmits uplink data, therefore, the transmission is meaningless.

The mobile station 13 performs a data transmission in a case where there are one or more grants of permission to transmit received from the radio base stations 11 to 21 and, moreover, there is not a single transmission refusal.

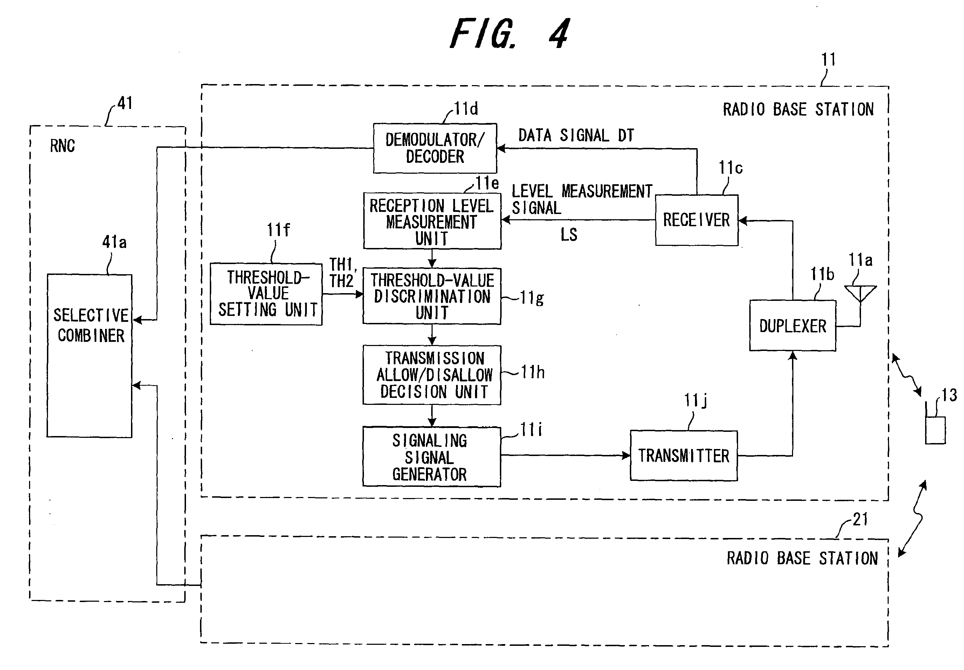

Fig. 4 is a block diagram illustrating a communication system according to the first embodiment. Here one mobile station 13, the first and second radio base stations 11, 21 and a radio network controller (RNC) 41 are illustrated. As the first and second radio base stations 11, 21 are identically constructed, only the structure of the first radio base station 11 is illustrated.

A signal received at an antenna 11a in the first radio base station 11 is input to a receiver 11c via a duplexer 11b. The receiver 11c frequency-converts the radio signal to a baseband signal, subjects the obtained baseband signal to orthogonal demodulation and AD conversion, subsequently multiplies the resultant signal by prescribed spreading codes and separates the signal into a data signal DT and a signal LS for level measurement. An uplink data channel and a control channel from a mobile station standardized according to 3GPP are a DPDCH (Dedicated Physical Data Channel) and a DPCCH (Dedicated Physical Control Channel), respectively. Accordingly, the spreading codes for each of the channels are used to multiply the baseband signal to effect separation into the data signal DT and level measurement signal (pilot signal) LS.

A demodulator/decoder 11d demodulates the received data, applies error-correction decoding processing and inputs the result to the higher-order RNC 41. The RNC 41 has a selective combiner 41a which, in the handover state, selects and inputs to a processor whichever of the receive signals that enter from the radio base stations 11, 21 has the higher reception level.

A reception level measurement unit 11e calculates pilot signal power as the reception level RL1, a threshold-value setting unit 11f outputs the threshold values TH1, TH2 described with reference to Fig. 3, and a threshold-value discrimination unit 11g compares the reception level RL1 with the threshold values TH1, TH2 and outputs the result of the comparison. As described above, a transmission allow/disallow decision unit 11h (1) instructs that transmission is allowed if the reception level RL1 is greater than the threshold value TH1, (2) instructs that transmission is not allowed (that transmission is refused) if the reception level RL1 is less than the threshold value TH1 and greater than the threshold value TH2, and (3) instructs that transmission is neither allowed or disallowed if the reception level RL1 is less than the threshold value TH2. A signaling signal generator 11i embeds the above-mentioned instructing signal (signaling signal) in a shared channel for signaling, and a transmitter 11j subjects the signaling signal to a DA conversion and orthogonal modulation, subsequently converts the signal to a radio-frequency signal and transmits this signal from the antenna 11a via the duplexer 11b.

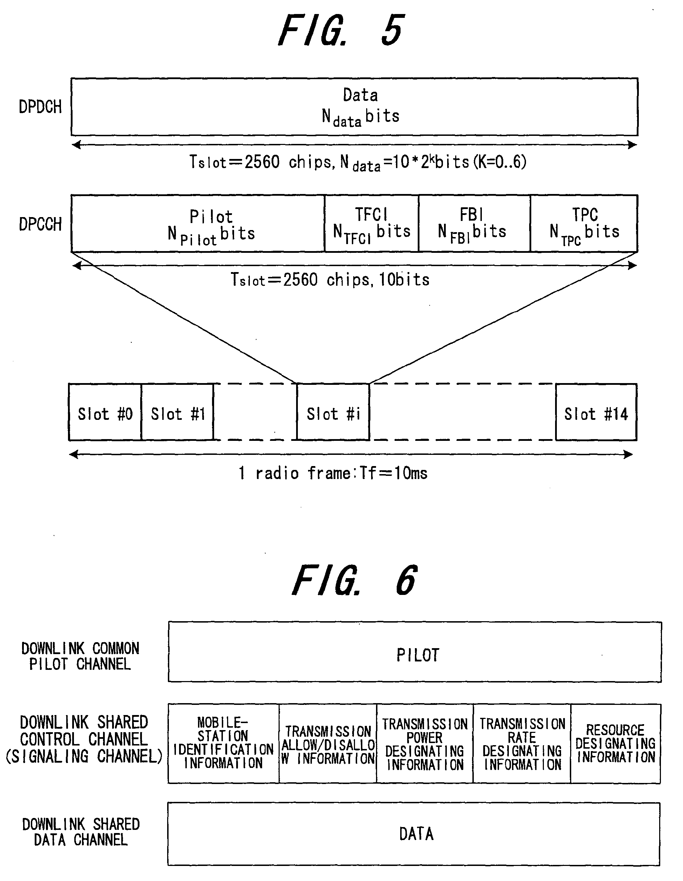

Fig. 5 is a diagram illustrating the structure of an uplink DPCH (Dedicated Physical Channel) frame standardized by 3GPP. As shown in Fig. 5, the uplink DPCH frame has a DPDCH (Dedicated Physical Data Channel) on which only transmit data is transmitted, and a DPCCH (Dedicated Physical Control Channel) on which a pilot and control data such as TPC bit information are multiplexed and transmitted. These are multiplexed upon being spread by respective ones of spreading codes. One uplink frame has a duration of 10 ms and is composed of 15 slots (slot #0 to slot #14). Each slot of the DPDCH consists of Ndata bits, and Ndata varies in accordance with the symbol rate. Each slot of the DPCCH that transmits the control data consists of ten bits, has a symbol rate of a constant 15 ksps and transmits a pilot PILOT, transmission power control data TPC, a transport format combination indicator TFCI and feedback information FBI.

Fig. 6 is a diagram illustrating an example of the frame structure of a shared channel for signaling. The signaling channel (a channel that specifies transmission allow/disallow) transmits mobile-station identification information, which is the destination of signaling, transmission allow/disallow information, transmission power designating information, transmission rate information and resource designating information, etc. More specifically, these items of information are spread using a pre-established spreading code after encoding and they are multiplexed and transmitted with the pilot of the downlink common pilot channel and with the data and code of the downlink shared data channel.

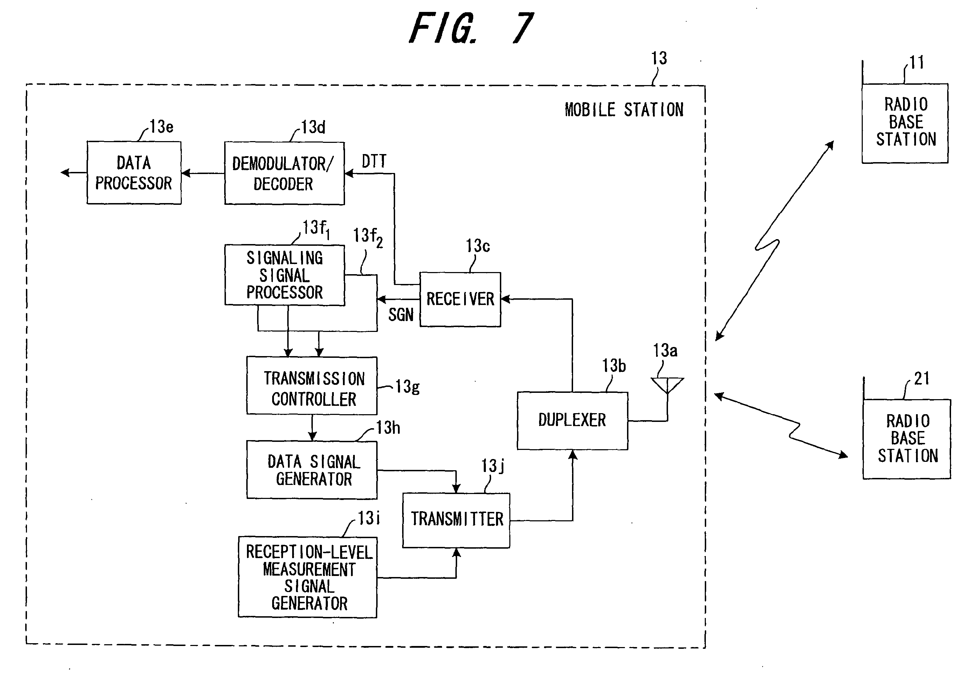

Fig. 7 is a block diagram of a mobile station according to the first embodiment. In the mobile station 13, the signal received by an antenna 13a is input to a receiver 13c via a duplexer 13b. The receiver 13c frequency-converts the radio signal to a baseband signal, subjects the obtained baseband signal to orthogonal demodulation and AD conversion, subsequently multiplies the resultant signal by prescribed spreading codes and separates the signal into a data signal DTT and a signaling signal SGN for every radio base station. That is, since the station code (scramble code) differs for every radio base station, these are multiplied by respective ones of scramble codes, the signals from the radio base stations are separated, multiplication is performed by prescribed spreading code for channelization and the data signal and signaling signal are separated. A demodulator/decoder 13d demodulates the received data from the serving cell (the base station currently providing service), applies error-correction decoding processing and inputs the result to a data processor 13e.

A first signaling signal processor 13f₁ processes the signaling signal that has entered from the radio base station 11 and inputs, to a transmission controller 13g, permission to transmit, denial of permission to transmit, as designated by the radio base station 11, or no designation. Similarly, a second signaling signal processor 13f₂ processes the signaling signal that has entered from the radio base station 21 and inputs, to the transmission controller 13g, permission to transmit, denial of permission to transmit, as designated by the radio base station 21, or no designation. The transmission controller 13g (1) decides that it is possible to transmit uplink data if transmission from one or more radio base stations 11, 21 is being allowed and, moreover, there is not a single transmission refusal, and (2) decides that a transmission of uplink data is impossible if there is not a single allowance of transmission from the radio base stations 11, 21 or if there is even a single transmission refusal.

A data signal generator 13h maps the uplink transmit data to the DPDCH of Fig. 5 if data transmission is possible. Further, a reception-level measurement signal generator 13i maps the pilot signal to the DPCCH of Fig. 5. A transmitter 13j applies orthogonal modulation using the DPDCH, DPCCH signals, subsequently frequency-converts the baseband signal to a radio signal and transmits the radio signal from antenna 13a via the duplexer 13b.

### .Modification

The foregoing is an example in which the invention is applied to a W-CDMA (Code Division Multiple Access) system. However, the invention is also applicable to a time multiplexing system or to a system that is a combination of time multiplexing and frequency multiplexing.

### (a) Time multiplexing

In a case where an uplink level measurement signal is time-multiplexed and transmitted, the signal received by the antenna 11a in the radio base station 11 shown in Fig. 4 is input to the receiver 11c via the duplexer 11b. The receiver 11c frequency-converts the radio signal to a baseband signal, subjects the obtained baseband signal to orthogonal demodulation and AD conversion, and subsequently separates a time-domain signal, which has been assigned to the data signal, into the data signal DT and a time-domain signal, which has been assigned to the level measurement signal, into the level measurement signal LS.

The demodulator/decoder 11d demodulates the received data, applies error-correction decoding processing and inputs the result to the higher-order RNC 41. In the handover state, the selective combiner 41a of the RNC 41 selects and inputs to a processor whichever of the received signals that enter from the radio base stations 11, 21 has the higher reception level.

The reception level measurement unit 11e calculates the power of the level measurement signal as the reception level RL1, the threshold-value setting unit 11f outputs the first and second threshold values TH1, TH2 described with reference to Fig. 3, and the threshold-value discrimination unit 11g compares the reception level RL1 with the threshold values TH1, TH2 and outputs the result of the comparison. As described above, the transmission allow/disallow decision unit 11h (1) instructs that transmission is allowed if the reception level RL1 is greater than the threshold value TH1, (2) instructs that transmission is not allowed (that transmission is refused) if the reception level RL1 is less than the threshold value TH1 and greater than the threshold value TH2, and (3) instructs that transmission is neither allowed or disallowed if the reception level RL1 is less than the threshold value TH2. The signaling signal generator 11i embeds the above-mentioned instructing signal (signaling signal) in the shared channel for signaling, and the transmitter 11j subjects the signaling signal to a DA conversion and orthogonal modulation, subsequently converts the signal to a radio-frequency signal and transmits this signal from the antenna 11a via the duplexer 11b.

In the mobile station 13 shown in Fig. 7, the signal received by an antenna 13a is input to the receiver 13c via the duplexer 13b. The receiver 13c frequency-converts the radio signal to a baseband signal, subjects the obtained baseband signal to orthogonal demodulation and AD conversion, and subsequently separates a time-domain data signal DTT, which has been assigned to the data signal, and a time-domain signaling signal SGN, which has been assigned to the signaling signal.

The first signaling signal processor 13f₁ processes the signaling signal that has entered from the radio base station 11 and inputs, to the transmission controller 13g, permission to transmit, denial of permission to transmit, as designated by the radio base station 11, or no designation. Similarly, the second signaling signal processor 13f₂ processes the signaling signal that has entered from the radio base station 21 and inputs, to the transmission controller 13g, permission to transmit, denial of permission to transmit, as designated by the radio base station 21, or no designation. The transmission controller 13g (1) decides that it is possible to transmit uplink data if there are one or more grants of permission to transmit received from the radio base stations 11, 21 and there is not a single transmission refusal, and (2) decides that a transmission of uplink data is impossible if there is not a single grant of transmission from the radio base stations 11, 21 or if there is even a single transmission refusal.

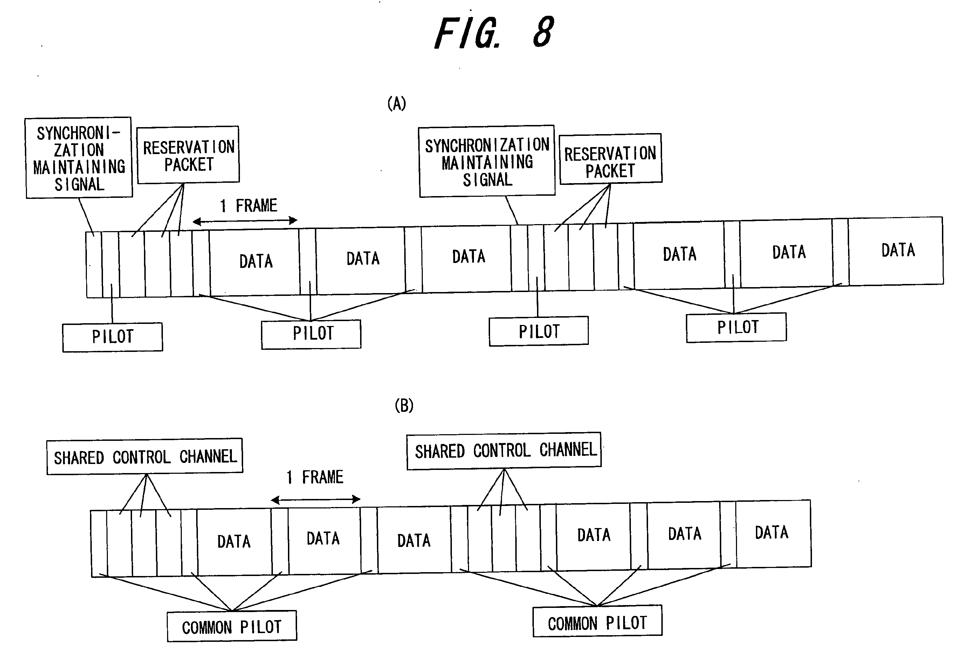

The data signal generator 13h maps the uplink transmit data to the data channel illustrated at (A) of Fig. 8 if data transmission is possible. Further, the reception-level measurement signal generator 13i maps the pilot signal to the pilot channel shown at (A) of Fig. 8. The transmitter 13j applies orthogonal modulation using the data channel and pilot channel, subsequently frequency-converts the baseband signal to a radio signal and transmits the radio signal from the antenna 13a via the duplexer 13b.

In Fig. 8, (A) illustrates the frame structure of an uplink frame in the case of time multiplexing. Each channel (a signal for maintaining synchronization, a reservation packet, a pilot and data) is multiplexed upon dividing time domains. The time that has been allocated to each channel is usable by each channel. In the Figure, the synchronization maintaining signal, which is a signal transmitted from the mobile station to the base station at regular time intervals, is for maintaining the synchronization between the base station and mobile station. The pilot is a pilot channel transmitted upon being appended to a reservation packet or data packet. This is a channel for estimating the propagation path and measuring uplink reception quality and reception level. The reservation packet is a channel for requesting the base station for allocation of downlink resources. The data section is a shared data channel for deploying a data channel. In a case where there is no traffic to be transmitted, or in case of a time period (frame) in which resources are not being allocated from the base station, transmission of a data channel is not performed.

In Fig. 8, (B) illustrates the frame structure of a downlink frame in the case of time multiplexing. Each channel (a pilot, shared control channel and data) is multiplexed upon dividing time domains. The common pilot channel, which is a pilot signal transmitted at regular time intervals, is used for estimating the propagation path and measuring downlink reception quality and reception level. The shared control channel is a channel for transmitting a signaling signal from the base station to the mobile station. This channel includes mobile-station identification information, which is the destination of signaling, transmission allow/disallow information, transmission-power designating information, transmission rate information and resource designating information, etc. These items of information are encoded and then transmitted. The data section is a shared data channel for deploying a data channel.

### (b) When time multiplexing and frequency multiplexing are combined

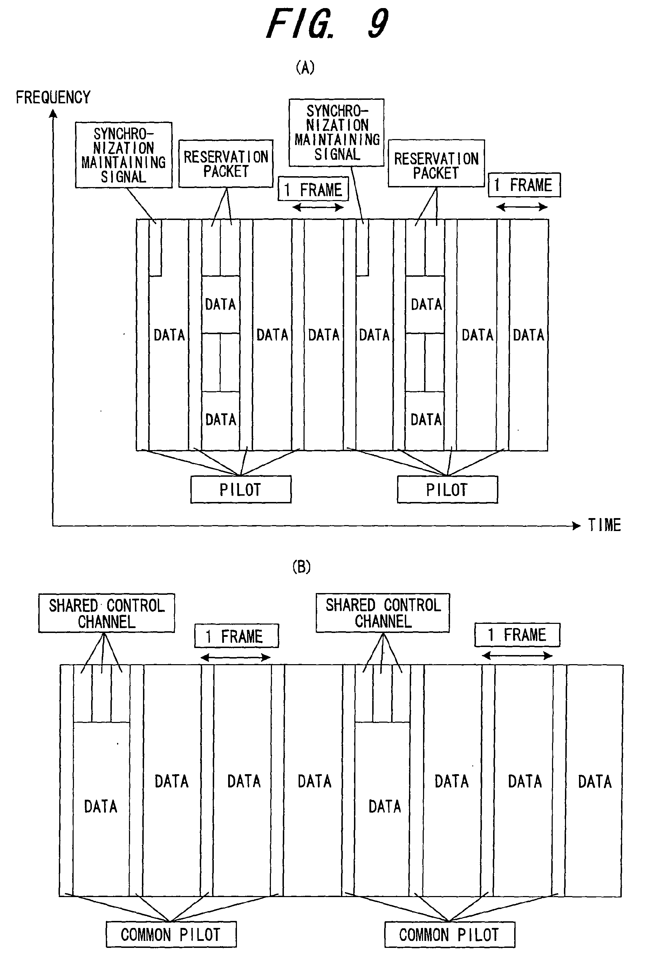

Fig. 9 illustrates examples of channel structure in a case where each channel is constructed by combining time multiplexing and frequency multiplexing, in which (A) is an example of frame structure on the uplink and (B) an example of frame structure on the downlink. Multiplexing and demultiplexing of each channel in the examples of frame structure in Fig. 9 is performed in accordance with time and frequency domains to which each channel has been allocated.

The control exercised above is such that at time A in Fig. 3, reception levels RL1, RL2 of a signal from the mobile station 13 are both greater than the threshold value TH1 at both radio base station 11 and radio base station 21. Both of the radio base stations 11, 21, therefore, perform signaling to allow the mobile station 13 to transmit. As a result, the mobile station 13 performs a data transmission and a diversity effect is obtained by receiving data at the two radio base stations 11, 21.

At time B in Fig. 3, the reception level RL1 of the signal from the mobile station 13 at the radio base station 11 is higher than the threshold value TH1 and therefore the radio base station 11 performs signaling to allow the mobile station 13 to transmit. On the other hand, the reception level RL2 of the signal from the mobile station 13 at the radio base station 21 is between the threshold value TH1 and the threshold value TH2 and therefore the radio base station 21 performs signaling to not allow the mobile station 13 to transmit. In such case the mobile station 13 does not transmit uplink data. As a result, interference from the mobile station 13 inflicted upon communication between the radio base station 21 and the other mobile station 23 can be reduced.

At a time C in Fig. 3, the reception level RL1 of the signal from the mobile station 13 at the radio base station 11 is higher than the first threshold value TH1 and therefore the radio base station 11 performs signaling to allow the mobile station 13 to transmit. On the other hand, the reception level of the signal from the mobile station 13 at the radio base station 21 is lower than the second threshold value TH2 and therefore the radio base station 21 does not perform signaling to the mobile station 13 with regard to whether transmission is allowed or not allowed. In this case, the mobile station 13 transmits uplink data and the radio base station 11 is capable of receiving the data from the mobile station 13. At time C, the signal from the mobile station 13 arrives at the radio base station 21 but since the level of this signal is low, interference is not inflicted upon communication between the radio base station 21 and mobile station 23 even though the mobile station 13 transmits data. In Fig. 3, TPP represents the intervals over which the mobile station 13 is capable of transmitting.

The foregoing relates to a case where a signaling signal that specifies transmission is transmitted from the two radio base stations 11, 21 to the mobile station 13 in the diversity state. However, the present invention is not limited to two radio base stations and can also be applied to a case where a signaling signal that specifies transmission is transmitted to a mobile station from three or more radio base stations.

In accordance with transmission control of the first embodiment, effective communication can be carried out by switching automatically between a mode in which diversity reception is performed and a mode in which interference is reduced.

### (C) Second Embodiment

In the first embodiment, the first and second threshold values TH1 and TH2 are fixed. In the second embodiment, however, these threshold values can be varied depending upon the QoS (Quality of Service) or real-time property of the data transmitted. For example, in the case of a circuit-switching-type service such as a voice call or TV telephone call, real-time communication is required. Therefore, in comparison with the case of a packet call (e-mail, etc. ) in which there is little demand for real-time communication, the threshold value TH1 is reduced and the threshold value TH2 enlarged so as to raise the probability that transmission will be allowed. In other words, the range of reception levels over which transmission is not allowed is narrowed.

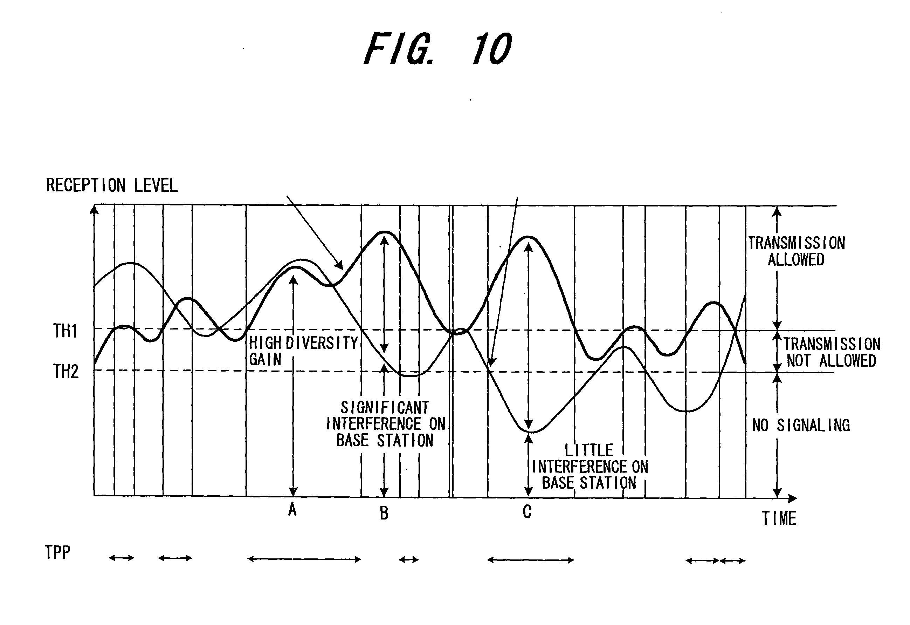

Fig. 10 is a diagram useful in describing ranges of levels at a base station for allowing or not allowing transmission in a case where the first threshold value TH1 is made small and the second threshold value TH2 is made large as compared with the first embodiment. It will be understood that the total time of the intervals TPP over which the mobile station 13 is capable of transmitting is longer than that of the first embodiment (see Fig. 3).

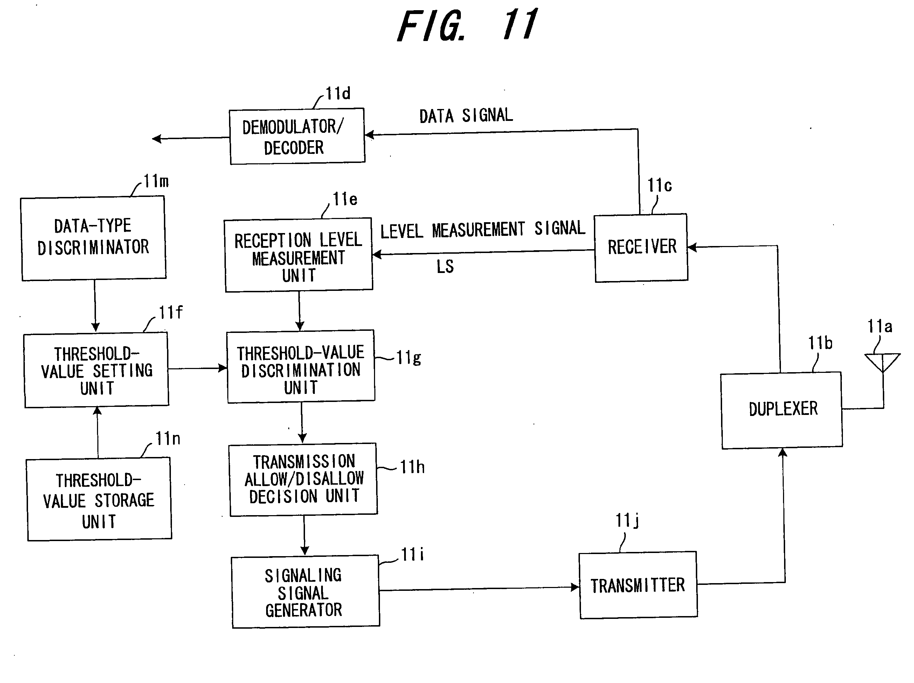

Fig. 11 is a block diagram of a radio base station according to the second embodiment. Components identical with those of the radio base station of the first embodiment in Fig. 4 are designated by like reference characters. This embodiment differs in that a data-type discriminator 11m for discriminating data type and a threshold-value storage unit 11n for storing the first and second threshold values TH1, TH2 in association with the data types are provided, and the first and second threshold values TH1, TH2 conforming to the data type are input to the threshold-value setting unit 11f.

In accordance with transmission control of the second embodiment, effective communication can be carried out by setting threshold values suited to the type of data and switching automatically between a mode in which diversity reception is performed and a mode in which interference is reduced.

### (D) Third Embodiment

The first and second embodiments relate to a case where the reception level of the pilot signal included in the DPCCH is measured. In a third embodiment, however, the reception level is measured using a reservation packet.

There are communication systems in which a reservation packet is transmitted from a mobile station to a radio base station and transmission of packet data is started when transmission is allowed by the radio base station. In such a communication system, the reception level can be measured using the reservation packet. In the third embodiment, the radio base stations 11, 21 (see Fig. 1) receive a reservation packet transmitted from the mobile station 13 and, upon measuring the reception level of the reservation packet, transmit a signalling packet that instructs the mobile station that it is allowed or not allowed to transmit.

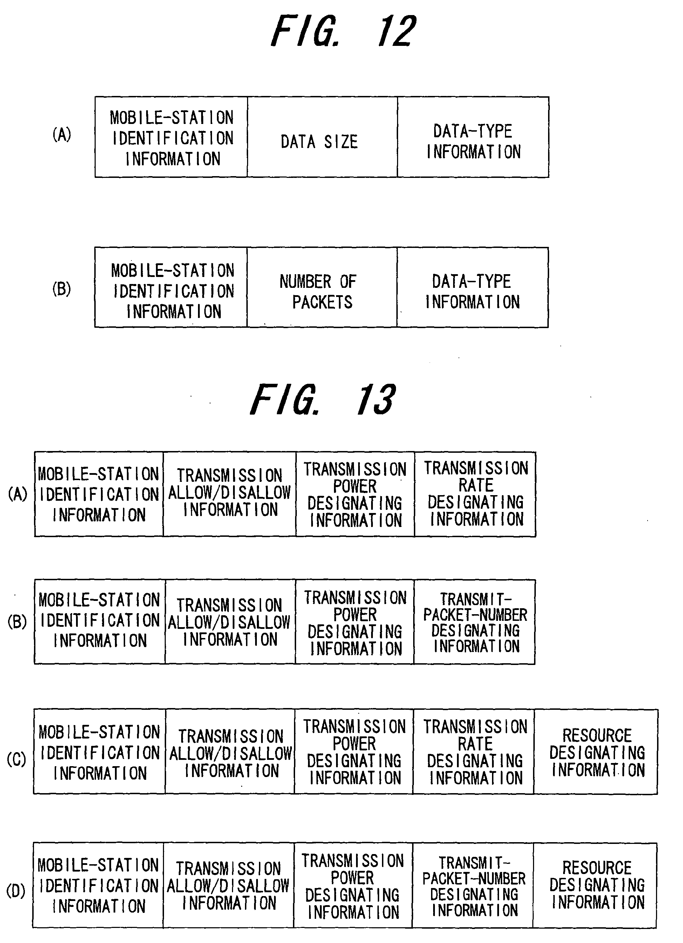

Fig. 12 illustrates examples of reservation packets according to the third embodiment, in which (A) represents an example that includes mobile-station identification information, data size transmitted and data-type information, and (B) represents an example that includes mobile-station identification information, number of packets to be transmitted and data-type information.

Fig. 13 illustrates examples of signaling packets, in which (A) represents an example that includes mobile-station identification information, transmission allow/disallow information, transmission power designating information and transmission rate designating information, (B) an example that includes mobile-station identification information, transmission allow/disallow information, transmission-power designating information and transmit-packet-number designating information, (C) an example that includes mobile-station identification information, transmission allow/disallow information, transmission-power designating information, transmission rate designating information and resource allocation information; and (D) an example that includes mobile-station identification information, transmission allow/disallow information, transmission-power designating information, transmit-packet-number designating information and resource allocation information. The resource allocation information includes spreading code, frequency allocation information and time-slot allocation information, etc., and the transmission rate designating information includes information such as transmission bit rate and packet size. It should be noted that a signaling packet that allows transmission and a signaling packet that does not allow transmission shall be referred to below as an "allow packet" and a "disallow packet", respectively.

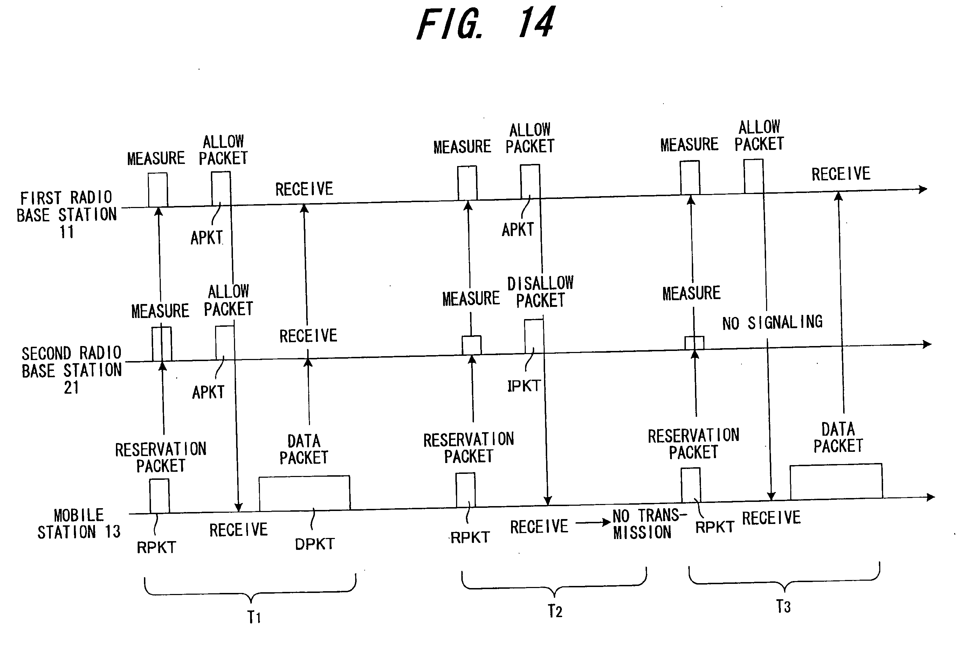

Fig. 14 is a diagram useful in describing transceive timing of a reservation packet RPKT, allow packet APKT and disallow packet IPKT. The first and second base stations 11, 21 receive the reservation packet RPKT transmitted from the mobile station 13, measure the reception levels RL1, RL2 (see Fig. 3), compare the reception levels RL1, RL2 with the first and second threshold values TH1, TH2 and, based upon the results of comparison, transmit the allow packet APKT or disallow packet IPKT or transmit no packet.

At a first timing T1 in Fig. 14, the reception levels RL1, RL2 of the reservation packet are both greater than the threshold value TH1 and therefore the first and second base stations 11, 21 transmit the allow packet to the mobile station 13. As a result, the mobile station 13 transmits an uplink data packet DPKT.

At a second timing T2, the reception level RL1 of the reservation packet is greater than the threshold value TH1 and therefore the first radio base station 11 transmits the allow packet APKT to the mobile station 13. However, since the reception level RL2 is less than the threshold value TH1 and greater than the threshold value TH2, the second radio base station 21 transmits the disallow packet IPKT to the mobile station 13. As a result, the mobile station 13 does not transmit an uplink data packet.

At a third timing T3, the reception level RL1 of the reservation packet is greater than the threshold value TH1 and therefore the first base station 11 transmits the allow packet APKT to the mobile station 13. However, since the reception level RL2 is less than the threshold value TH2, the second base station 21 transmits neither the allow packet nor the disallow packet to the mobile station 13. In this case, the mobile station 13 transmits the uplink data packet DPKT.

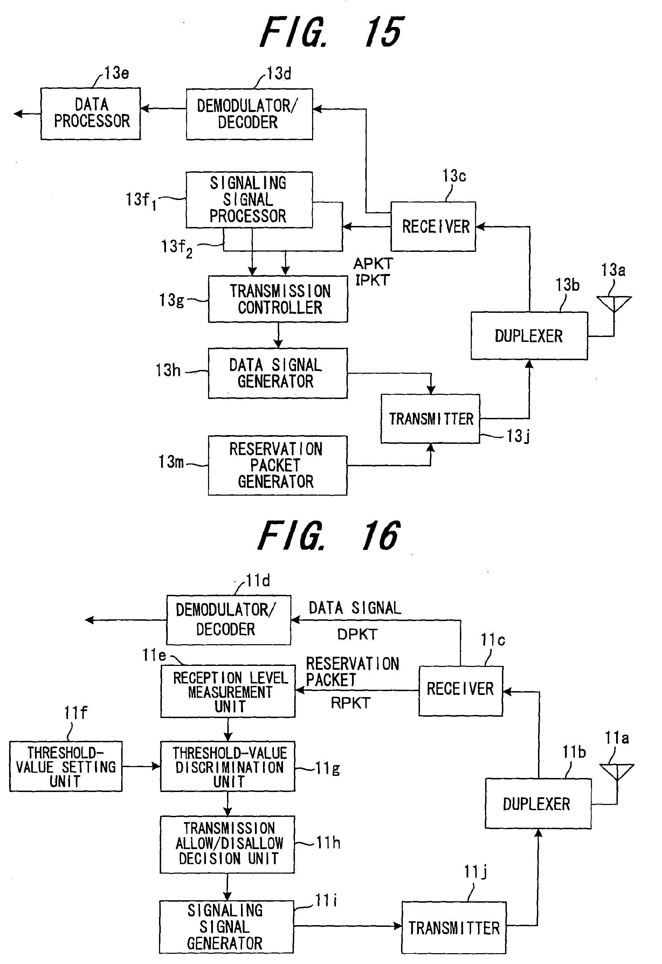

Fig. 15 is a block diagram of a mobile station according to the third embodiment. Functional components identical with those of the mobile station of the first embodiment are designated by like reference characters. The transmitter 13 j in the mobile station 13 transmits the reservation packet RPKT, which has been generated by a reservation packet generator 13m, to the radio base stations 11, 21 periodically via the duplexer 13b and antenna 13a.

Further, signals received from the radio base stations 11, 21 by the antenna 13b are received by receiver 13c via the duplexer 13b. The receiver 13c separates the signaling packet for every radio base station and inputs the signaling packet to the signaling signal processors 13f₁, 13f₂.

The first signaling signal processor 13f₁ processes the signaling packet that has been received from the radio base station 11 and inputs, to the transmission controller 13g, the designation from the radio base station 11 with respect to the reservation packet (permission to transmit, denial of permission to transmit, or no designation). Similarly, the second signaling signal processor 13f₂ processes the signaling packet that has been received from the radio base station 21 and inputs, to the transmission controller 13g, the designation from the radio base station 21 (permission to transmit, denial of permission to transmit, or no designation). The transmission controller 13g (1) decides that it is possible to transmit an uplink packet if it is allowed to transmit by either of the radio base stations 11, 21 and, moreover, there is no transmission refusal from either of the radio base stations 11, 21, and (2) decides that a transmission of an uplink packet is impossible if there is no allowance of transmission from either of the radio base stations 11, 21 or if there is transmission refusal from either of the radio base stations 11, 21. The data signal generator 13h generates an uplink packet if transmission is possible, and the transmitter 13j applies transmit processing to this packet and transmits the result from the antenna 13a via the duplexer 13b.

Fig. 16 is a block diagram of a radio base station according to the third embodiment. Functional components identical with those of the radio base station of the first embodiment are designated by like reference characters. The receiver 11c separates the uplink data packet DPKT and reservation packet RPKT from the signal received by the antenna 11a from the mobile station 13, and inputs the reservation packet to the reception level measurement unit 11e. The reception level measurement unit 11e measures the reception level RL1 of the reservation packet, and the threshold-value discrimination unit 11g compares the reception level RL1 with the threshold values TH1, TH2 and outputs the result of comparison. As in the first embodiment, the transmission allow/disallow decision unit 11h (1) instructs that transmission is allowed if the reception level RL1 is greater than the threshold value TH1, (2) instructs that transmission is not allowed if the reception level RL1 is less than the threshold value TH1 and greater than the threshold value TH2, and (3) instructs that transmission is neither allowed or disallowed if the reception level RL1 is less than the threshold value TH2. The signaling signal generator 11i generates the allow packet APKT, which indicates that transmission is allowed, in case of (1) above; generates the disallow packet IPKT, which indicates that transmission is not allowed, in case of (2) above; and does not generate a signaling packet in case of (3) above. The transmitter 11j transmits the signaling packet, which has been generated by the signaling signal generator 11i, to the mobile station 13 via the duplexer 11b and antenna 11a.

In accordance with the third embodiment, whether transmission is allowed or not can be controlled based upon the reception level of a reservation packet in a communication system that controls transmission using a reservation packet and an allow packet.

### (E) Modifications

### (a) First modification

If a uplink dedicated channel has been established in the first embodiment, the reception level of the uplink dedicated channel is measured at each base station and notification as to whether transmission is allowed or not allowed is given on the shared channel for signaling. However, such notification can also be given as follows: The radio base stations 11, 21 measure the reception level of the uplink dedicated channel at prescribed intervals and notify the mobile station 13 of transmission allow/disallow using a signaling packet.

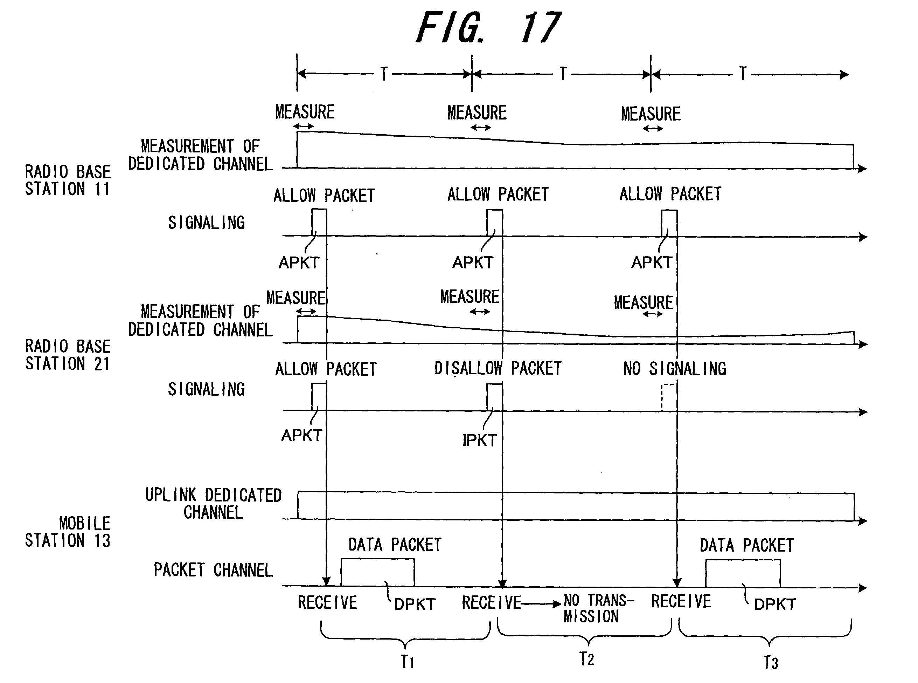

Fig. 17 is a diagram useful in describing reception-level measurement timing and transmit timing of a signaling packet according to the first modification. The radio base stations 11, 21 measure the reception level of the uplink dedicated channel at a prescribed period T and send the mobile station 13 a signaling packet (allow packet APKT or disallow packet IPKT) indicating whether transmission is allowed or not allowed.

At first timing T1, the reception levels RL1, RL2 are both greater than the threshold value TH1 and therefore the first and second base stations 11, 21 transmit the allow packet to the mobile station 13. As a result, the mobile station 13 transmits the uplink data packet DPKT.

At a second timing T2, the reception level RL1 is greater than the threshold value TH1 and therefore the first radio base station 11 transmits the allow packet APKT to the mobile station 13. However, since the reception level RL2 is less than the threshold value TH1 and greater than the threshold value TH2, the second radio base station 21 transmits the disallow packet IPKT to the mobile station 13. As a result, the mobile station 13 does not transmit an uplink data packet.

At a third timing T3, the reception level RL1 is greater than the threshold value TH1 and therefore the first base station 11 transmits the allow packet APKT to the mobile station 13. However, since the reception level RL2 is less than the threshold value TH2, the second base station 21 transmits neither the allow packet nor the disallow packet to the mobile station 13. In this case, the mobile station 13 transmits the uplink data packet DPKT.

Although Fig. 17 indicates an example of a case where the measurement timing and measurement period are the same at the radio base station 11 and radio base station 21, they need not be simultaneous at different radio base stations and measurement may be performed independently at each radio base station at an independent timing or independent measurement period.

### (b) Second modification

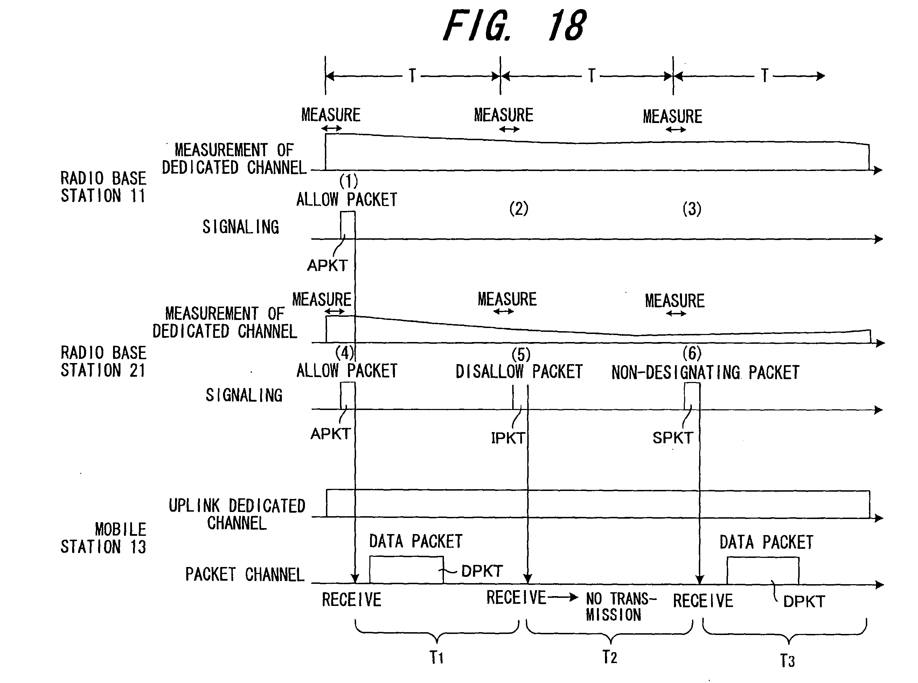

With regard to signaling of allow/disallow packets, such signaling need not necessarily be carried out in a case where the result of measurement is the same as before. That is, it may be so arranged that a signaling packet to a mobile station is transmitted only in a case where there has been a change in signaling content that is based upon the result of measurement. Fig. 18 is a diagram useful in describing operation for transmitting a signaling packet to a mobile station only in a case where signaling content has changed. Result of measurement of an uplink dedicated channel at the radio base station 11 is such that the reception level RL1 is greater than the threshold value TH1 three times, meaning that the result is the same three times. As a result, the radio base station 11 transmits the allow packet APKT only at the initial timing (1) and does not transmit the allow packet APKT at timings (2) and (3). On the other hand, at the radio base station 21, the reception level RL2 is greater than the threshold value TH1 at timing (4), the reception level RL2 is less than the threshold value TH1 and greater than the threshold value TH2 at the next timing (5), and the reception level RL2 is less than the threshold value TH2 at the next timing (6). Thus the results of measurement are not the same at each of these timings. As a result, the radio base station 21 transmits the allow packet APKT at timing (4), transmits the disallow packet IPKT at the next timing (5) and transmits a signaling packet (a non-designating packet) SPKT, which designates neither allow nor disallow, at the next timing (6).

The mobile station 13 stores the latest allow/disallow state specified by the signaling packets from the radio base stations 11, 21. Since both of the radio base stations 11, 21 are allowing transmission at timing T1, the mobile station transmits the uplink data packet DPKT. At timing T2, the radio base station 11 is allowing transmission and the radio base station 21 is not. An uplink data packet, therefore, is not transmitted. At timing T3, the radio base station 11 is allowing transmission and the radio base station 21 is not specifying whether transmission is allowed or not allowed. An uplink data packet DPKT, therefore, is transmitted. An advantage of the second modification is that the number of times a signaling packet is transmitted can be reduced.

### (C) Third modification

In the first embodiment, the reception level is measured using a dedicated physical channel. However, in a case where another channel, not necessarily a dedicated physical channel, has been established between a mobile station and a radio base station, the reception level of this channel may just as well be measured by each radio base station.

For example, if there is a channel (such as a channel for maintaining synchronization) transmitted from the mobile station 13 periodically, the uplink reception level may be measured using this channel. In a case where a channel on which an uplink packet is transmitted periodically to a certain extent, as in a circuit switching service call for voice or the like, has been established between a mobile station and a radio base station, the uplink reception level may be measured using this channel.

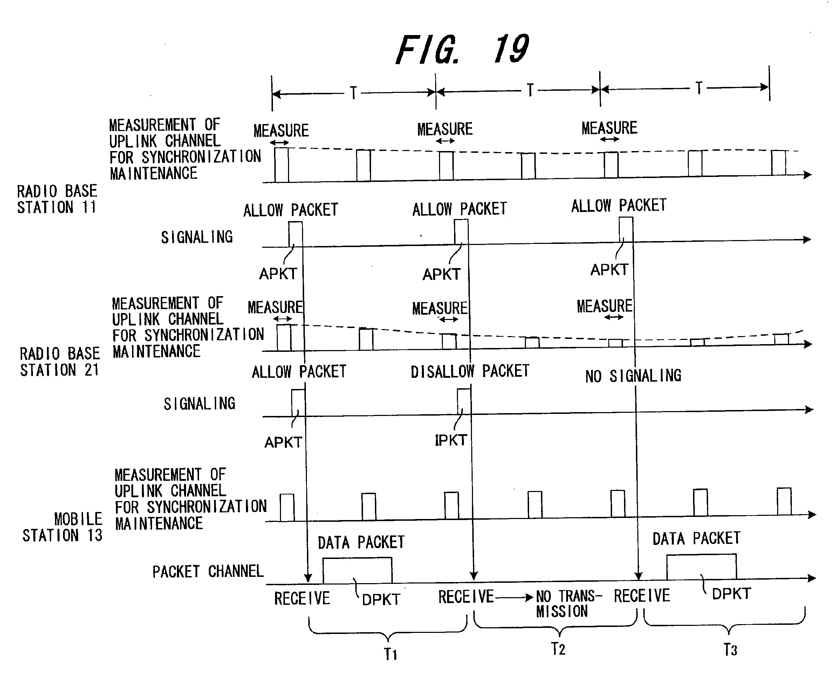

Fig. 19 is a diagram useful in describing operation according to the third modification. Here the radio base stations 11, 21 each measure the reception level of a synchronization-maintaining uplink channel, which is the object of measurement, at a prescribed period T, and transmit the allow packet APKT or disallow packet IPKT to the mobile station 13 based upon the size relationship between the reception level and the threshold values TH1, TH2, and the mobile station 13 transmits the uplink data packet in a manner similar to that of the first embodiment or first modification.

Although Fig. 19 indicates an example of a case where the measurement timing and measurement period are the same at the radio base station 11 and radio base station 21, they need not be simultaneous at different radio base stations and measurement may be performed independently at each radio base station at an independent timing or independent measurement period.

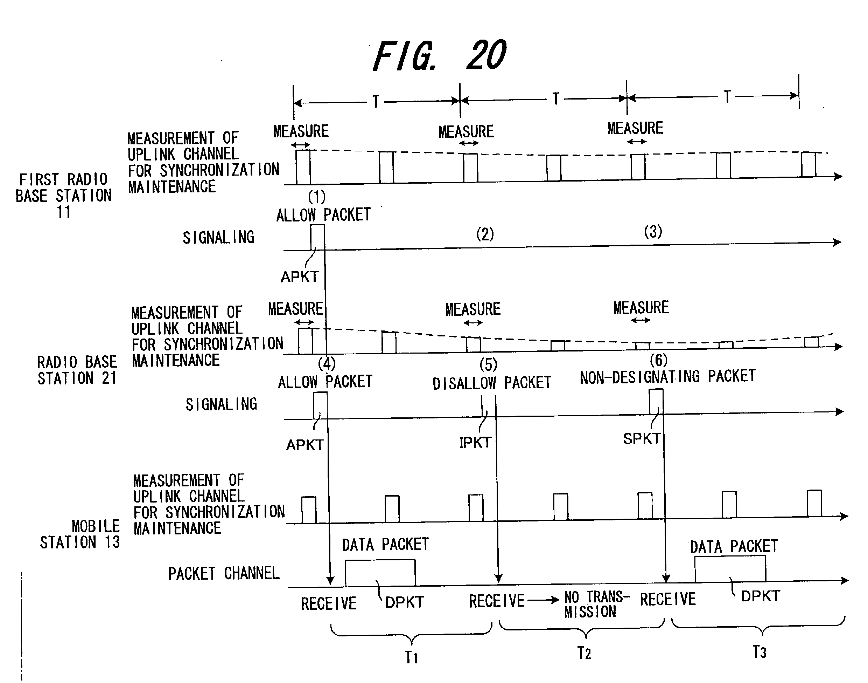

Further, in the third modification, it may be so arranged that a signaling packet to a mobile station is transmitted only in a case where signaling content based upon result of measurement has changed. Fig. 20 is a diagram useful in describing an operation for transmitting a signaling packet to a mobile station only in a case where signaling content has changed.

### (F) Fourth Embodiment

In the foregoing embodiments, a radio base station measures the radio environment between itself and a mobile station. In a fourth embodiment, the mobile station measures the radio environment between itself and each radio base station.

As shown in Fig. 1, it is assumed that the mobile station 13 is present at a location (handover area) that is equidistant from the radio base station 11 and the radio base station 21. In such case the reception levels of signals from the base stations 11, 21 at the mobile station 13 will be the same in average terms and the signal from the mobile station 13 will be capable of being received by both the first radio base station 11 and second radio base station 21. In actuality, however, the reception levels fluctuate independently owing to fading and the like and, as a consequence, whether the signal from the mobile station 13 can be received correctly at each of the radio base stations 11, 21 fluctuates independently.

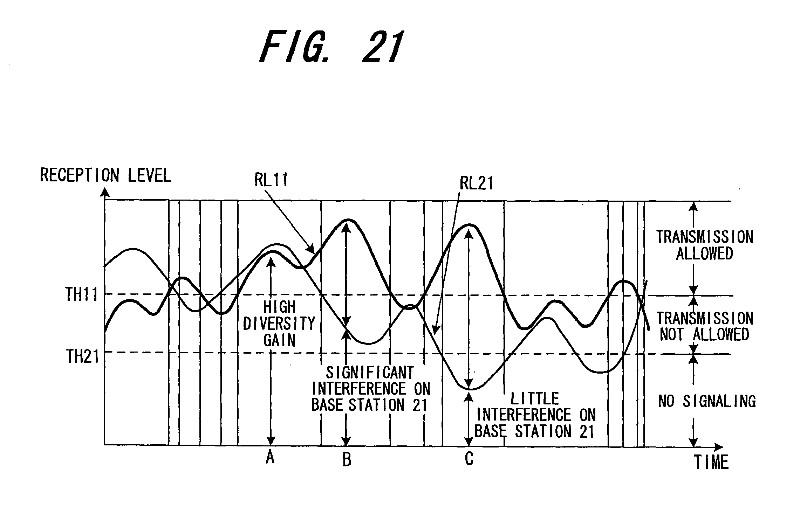

Fig. 21 is a diagram useful in describing ranges of levels for allowing or not allowing transmission at a mobile station. At a time A in Fig. 21, reception levels RL11, RL21 of signals from both of the radio base stations 11, 21 at the mobile station 13 are large. As a result, the probability that the signal from the mobile station 13 can be received correctly by one or both of the radio base stations 11, 21 is very high, and diversity gain can be obtained. At time A, therefore, the mobile station 13 determines that transmission of uplink data is possible.

On the other hand, at a time B in Fig. 21, the reception level RL11 of the signal from the radio base station 11 at the mobile station 13 is high and the reception level RL21 of the signal from the radio base station 21 at the mobile station 13 is medium. In such case the probability that the signal from the mobile station 13 can be received correctly at the radio base station 11 is high but the probability that it can be received correctly at the radio base station 21 is low. Further, there is a possibility that the radio base station 21 will be communicating with the other mobile station 23 that is present in cell 22, and the radio waves emitted from the mobile station 13 may interfere with the radio waves that the mobile station 23 transmits to the second radio base station 21. At time B, therefore, the mobile station 13 determines that transmission of uplink data is not possible.

Furthermore, at a time C in Fig. 21, the reception level RL11 of the signal from the radio base station 11 at the mobile station 13 is high and the reception level RL21 of the signal from the radio base station 21 at the mobile station 13 is low. In such case the probability that the signal from the mobile station 13 can be received correctly at the radio base station 11 is high but the probability that it can be received at the radio base station 21 is very low. However, radio waves emitted from the mobile station 13 will not interfere with radio waves that the mobile station 23 transmits to the second radio base station 21. At time C, therefore, the mobile station 13 determines that transmission of uplink data is possible.

In view of the foregoing, the mobile station 13 provides two threshold values TH11, TH12 (TH11>TH21) with respect to reception level in order to determine whether it is capable of transmitting to the radio base stations.
(1) If the reception levels RL11, RL21 of the signals from the radio base stations 11, 21 are both greater than the first threshold value TH11, then the mobile station 13 determines that it is capable of transmitting and transmits uplink data to each of the radio base stations 11, 21.
(2) In a case where, even if the reception level RL11 of the signal from one radio base station, e.g. , radio base station 11, is greater than the first threshold value TH11, the reception level RL21 of the signal from the other radio base station, e.g., radio base station 21, is less than the first threshold value TH11 and greater than the second threshold value TH21, interference will be produced. The mobile station 13 therefore determines that transmission is not possible and does not transmit uplink data to the radio base stations 11, 21.
(3) If the reception level RL11 of the signal from one radio base station, e.g., radio base station 11, is greater than the first threshold value TH11 and the reception level RL21 of the signal from the other radio base station, e.g., radio base station 21, is less than the second threshold value TH21, then interference will not be produced. The mobile station 13 therefore determines that it is capable of transmitting and transmits uplink data to each of the radio base stations 11, 21.

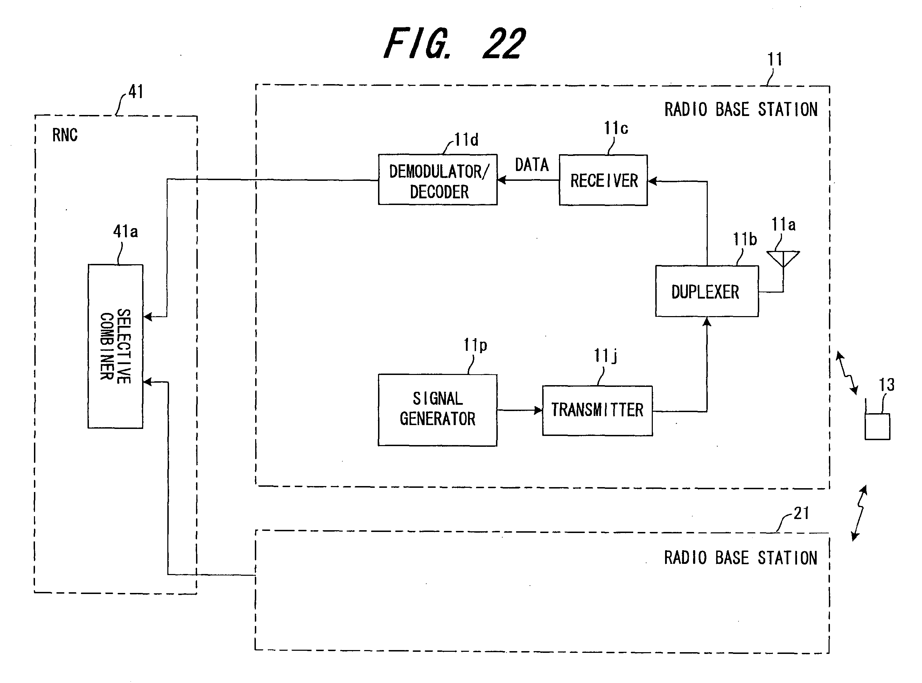

Fig. 22 is a diagram illustrating the configuration of a communication system according to the fourth embodiment. Functional components identical with those of the first embodiment are designated by like reference characters. Although Fig. 22 illustrates one mobile station 13, first and second radio base stations 11, 21 and radio network controller (RNC) 41, the number of radio base stations is not limited to two. Further, as the first and second radio base stations 11, 21 are identically constructed, only the structure of the first radio base station 11 is illustrated.

The first radio base station 11 includes a signal generator 11p that generates a signal for measurement of reception level. The signal generator 11p generates a Common Pilot Channel (CPICH) as a signal for measuring reception level. The transmitter 11j transmits the CPICH from the antenna via the duplexer 11b.

The radio signal received by the antenna 11a is input to the receiver 11c via the duplexer 11b. The receiver 11c frequency-converts the radio signal to a baseband signal, subjects the obtained baseband signal to orthogonal demodulation and AD conversion, and subsequently multiplies the resultant signal by prescribed spreading codes and inputs the data signal to the demodulator/decoder 11d. The demodulator/decoder 11d demodulates the received data, applies error-correction decoding processing and inputs the result to the higher-order RNC 41. In the handover state, the selective combiner 41a of the RNC 41 selects and inputs to a processor whichever of the received signals that enter from the radio base stations 11, 21 has the higher reception level.

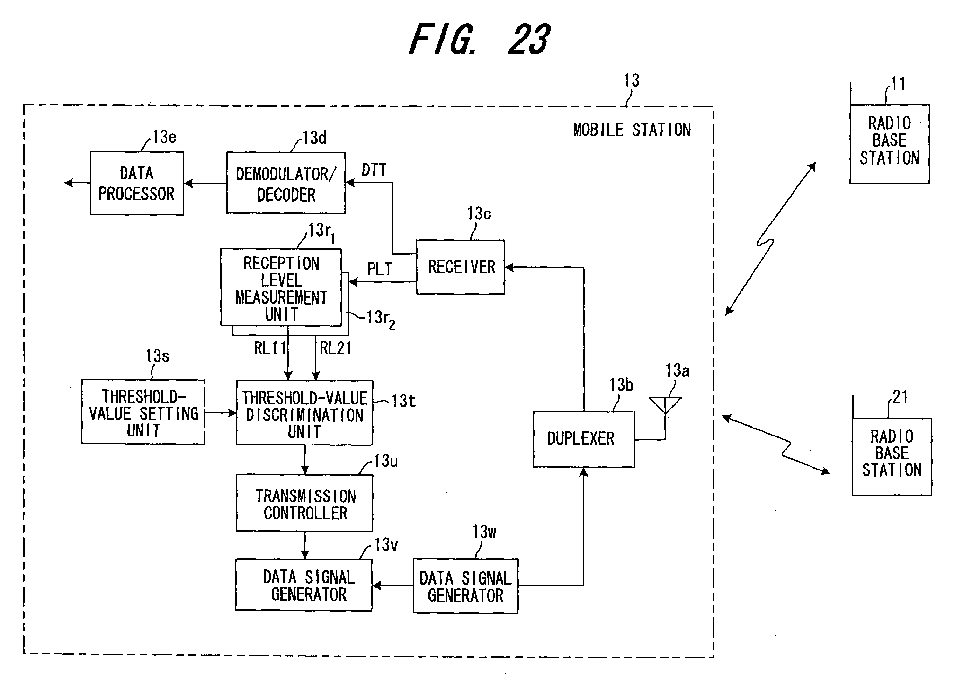

Fig. 23 is block diagram of a mobile station according to the fourth embodiment. In the mobile station 13, the signal received by an antenna 13a is input to the receiver 13c via the duplexer 13b. The receiver 13c frequency-converts the radio signal to a baseband signal, subjects the obtained baseband signal to orthogonal demodulation and AD conversion, and subsequently multiplies the resultant signal by prescribed spreading codes and separates the data signal DTT and pilot signal PLT for every radio base station. That is, since the station code (scramble code) differs for every radio base station, these are multiplied by respective ones of scramble codes, the signals from the radio base stations are separated, multiplication is then performed by prescribed spreading code for channelization and the data signal DTT and pilot signal PLT are separated. A demodulator/decoder 13d demodulates the received data from the serving cell (the base station currently providing service), applies error-correction decoding processing and inputs the result to a data processor 13e. The demodulator/decoder 13d demodulates the received data from the serving cell (the base station currently providing service), applies error-correction decoding processing and inputs the result to the data processor 13e.

A first reception level measurement unit 13r₁ measures the reception level RL11 using the pilot signal that has entered from the radio base station 11, and a second reception level measurement unit 13r₂ measures the reception level RL21 using the pilot signal that has entered from the radio base station 21. A threshold-value setting unit 13s outputs the first and second threshold values TH11, TH21 described with reference to Fig. 21, and a threshold-value discrimination unit 13t compares the reception levels RL11, RL21 with the threshold values TH11, TH21 and outputs the result of the comparison to a transmission controller 13u.

In a case where the reception levels RL11, RL21 of the signals received from the radio base stations 11, 21 are both greater than the first threshold value TH11, the transmission controller 13u determines that transmission is possible and instructs a data signal generator 13v to transmit uplink data to the radio base stations 11, 21. In a case where, even if the reception level RL11 of the signal from the radio base station 11 is greater than the first threshold value TH11, the reception level RL21 of the signal from the other radio base station 21 is less than the first threshold value TH11 and greater than the second threshold value TH21, interference will be produced. The transmission controller 13u therefore instructs the data signal generator 13v not to transmit uplink data to the radio base stations 11, 21. Furthermore, if the reception level RL11 of the signal from the radio base station 11 is greater than the first threshold value TH11 and the reception level RL21 of the signal from the other radio base station 21 is less than the second threshold value TH21, then interference will not be produced. The transmission controller 13u therefore determines that transmission is possible and instructs the data signal generator 13v to transmit uplink data to the radio base stations 11, 21.

If transmission is instructed, the data signal generator 13v maps the transmit data to a prescribed channel, e.g., the DPDCH, and a transmitter 13w performs orthogonal modulation using the transmit data, subsequently effects a conversion from baseband frequency to radio frequency and transmits the resultant signal to each of the base stations from the antenna 13a via the duplexer 13b.

Thus, in accordance with the present invention, a mobile station is allowed to transmit if it is expected that diversity gain will be obtained, and is not allowed to transmit if it is expected that interference will result. As a result, a diversity effect can be obtained or amount of interference imposed on other base stations reduced, thereby making it possible to improve the quality of the system.

Although the invention has been described with regard to a case where transmission is controlled based upon reception level, the invention is not limited to reception level and reception quality or some other value may be adopted as a value for discriminating the radio environment (i.e., as a radio environment value) and transmission can be controlled based upon the radio environment value.

As many apparently widely different embodiments of the present invention can be made without departing from the spirit and scope thereof, it is to be understood that the invention is not limited to the specific embodiments thereof except as defined in the appended claims.

## Claims

1. A mobile communication system having a mobile station and first and second radio base stations for receiving a radio signal transmitted from said mobile station, said system comprising:
an evaluation unit for evaluating a first radio environment between said mobile station and said first radio base station, and a second radio environment between said mobile station and said second radio base station; and
a transmission controller for exercising control that limits transmission of data from said mobile station in a case where, based upon the evaluation in said evaluation unit, the first radio environment belongs to a first radio environment state superior to a prescribed first reference but the second radio environment belongs to a second radio environment state that is inferior to a prescribed second reference.

2. The system according to claim 1, wherein the first reference and the second reference are made the same.

3. The system according to claim 1, wherein the second radio environment state is a radio environment state that belongs between a third reference, which is inferior to the second reference in terms of radio environment, and the second reference.

4. The system according to claim 1, wherein said transmission controller allows a data transmission from said mobile station in a case where, based upon the evaluation in said evaluation unit, the first radio environment belongs to the first radio environment state superior to the prescribed first reference but the second radio environment belongs to a third radio environment state that is inferior to the third reference.

5. The system according to claim 1, wherein said evaluation unit is provided in each of said radio base stations, said transmission controller is provided in said mobile station, said evaluation unit of each of said radio base stations transmits results of evaluation of the first and second radio environments to the transmission controller of said mobile station, and said transmission controller exercises regulatory control of the transmit data based upon results of evaluation of the first and second radio environments.

6. The system according to claim 1, wherein said evaluation unit and said transmission controller are provided in said mobile station, and said evaluation unit evaluates the first and second radio environments and inputs results of evaluation to said transmission controller for each radio base station.

7. A radio base station in a mobile communication system having a mobile station and first and second radio base stations for receiving a radio signal transmitted from said mobile station, said radio base station comprising:
a radio environment evaluation unit for evaluating whether a radio environment between said mobile station and the radio base station is an environment in which diversity gain is obtained or an environment in which diversity gain is not obtained and interference will be impressed upon communication with another radio base station; and
a transmission controller for allowing said mobile station to transmit if the radio environment is the environment in which diversity gain is obtained, disallowing said mobile station to transmit if the radio environment is the environment in which interference will be impressed upon communication, and neither allowing nor disallowing said mobile station to transmit if the radio environment is an environment in which although diversity gain is not obtained, no interference will be impressed upon communication.

8. The radio base station according to claim 7, wherein said radio environment evaluation unit includes:
a measurement unit for measuring reception quality or reception level of a signal, which has been received from said mobile station, as a discrimination value for discriminating the radio environment; and
a comparator for comparing this discrimination value with a first threshold value and a second threshold value that is smaller than the first threshold value;
said transmission controller allowing said mobile station to transmit if the discrimination value is greater than the first threshold value, disallowing said mobile station to transmit if the discrimination value is less than the first threshold value and greater than the second threshold value, and neither allowing nor disallowing said mobile station to transmit if the discrimination value is less than the second threshold value.

9. The radio base station according to claim 8, wherein said mobile station performs a transmission of uplink data if it is being allowed to transmit by one or more radio base stations and, moreover, it is not being disallowed to transmit by any radio base station.

10. The radio base station according to claim 8, wherein said radio environment evaluation unit has a threshold-value changing unit for controlling the first and second threshold values depending upon type of data transmitted.

11. The radio base station according to claim 8, wherein said measurement unit of said radio environment evaluation unit includes:
a reservation packet extraction unit for extracting a reservation packet transmitted by said mobile station; and
a reception level measurement unit for measuring reception level of the reservation packet as the radio environment discrimination value.

12. The radio base station according to claim 8, wherein said measurement unit of said radio environment evaluation unit measures reception level of an uplink dedicated channel, which is transmitted by said mobile station, as the radio environment discrimination value; and
said transmission controller transmits transmission control information, which indicates that transmission is allowed or disallowed, to said mobile station at a prescribed frequency.

13. The radio base station according to claim 8, wherein when there has been a change in content of transmission control information that notifies said mobile station of whether transmission is allowed or disallowed, said transmission controller transmits the transmission control information to said mobile station.

14. The radio base station according to claim 8, wherein when there has been a change in content of transmission control information that notifies said mobile station of whether transmission is allowed or disallowed, said transmission controller transmits the transmission control information to said mobile station; and
said mobile station stores the content of latest transmission control information received and transmits uplink data based upon the content of the latest transmission control information in an interval in which the transmission control information is not being received.

15. A mobile station in a mobile communication system having a mobile station and first and second radio base stations for receiving a radio signal transmitted from said mobile station, said mobile station comprising:
a radio environment measurement unit for measuring radio environments between the mobile station and one or more radio base stations and outputting a radio environment measurement value;
a radio environment discrimination unit for comparing, for each radio base station, the radio environment measurement value with a first threshold value and a second threshold value that is smaller than the first threshold value, determining that the radio environment is one in which a transmission to the radio base station is possible if the measurement value is greater than the first threshold value, determining that the radio environment is one in which a transmission to the radio base station is impossible if the measurement value is less than the first threshold value and greater than the second threshold value, and determining that the radio environment is one in which no interference will be impressed upon the radio base station, even if the mobile station transmits, if the measurement value is less than the second threshold value; and
a transmission controller for performing a transmission of uplink data if the radio environments between this mobile station and one or more radio base stations are radio environments in which the transmission is possible and, moreover, the radio environment between this mobile station and any radio base station is not a radio environment in which the transmission is impossible.

16. The mobile station according to claim 15, wherein said radio environment determination unit measures reception quality or reception level of a signal, which has been received from said radio base station, as a value for discriminating the radio environment

17. The mobile station according to claim 15, wherein said radio environment determination unit has a threshold-value changing unit for controlling the first and second threshold values depending upon type of data transmitted.
